(19) Europäisches Patentamt / European Patent Office / Office européen des brevets

(11) **EP 2 360 863 B1**

(12) **EUROPEAN PATENT SPECIFICATION**

(45) Date of publication and mention
of the grant of the patent:
**09.04.2014  Bulletin 2014/15**

(51) Int Cl.:
*H04L 1/00* *(2006.01)*          *H04L 12/24* *(2006.01)*

(21) Application number: **10290068.5**

(22) Date of filing: **12.02.2010**

(54) **Method and device for transmitting data symbols**

Verfahren und Vorrichtung zur Übertragung von Datensymbolen

Procédé et dispositif pour transmettre des symboles de données

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**24.08.2011  Bulletin 2011/34**

(73) Proprietor: **CANON KABUSHIKI KAISHA Tokyo (JP)**

(72) Inventors:
• **Tannhäuser, Falk**
  **35000 Rennes (FR)**
• **Sevin, Julien**
  **35140 Sanint Aubin Du Cormier (FR)**

(74) Representative: **Stankoff, Hélène SANTARELLI 14 avenue de la Grande Armée 75017 Paris (FR)**

(56) References cited:
**FR-A1- 2 932 630     US-A1- 2008 089 333**

• **MAGLI E ET AL: "An overview of network coding for multimedia streaming" MULTIMEDIA AND EXPO, 2009. ICME 2009. IEEE INTERNATIONAL CONFERENCE ON, IEEE, PISCATAWAY, NJ, USA, 28 June 2009 (2009-06-28), pages 1488-1491, XP031511041 ISBN: 978-1-4244-4290-4**

## Description

The present invention relates to a method and a device for transmitting data symbols. It applies to telecommunication networks, and in particular to wired or wireless meshed networks based on relay nodes retransmitting messages received from source nodes to destination nodes.

A wired or wireless meshed communication network comprises a set S of K source nodes, a set of $N_{init}$ relay nodes with $N_{init} > K$ and a set of destination nodes. Each message provided by any one of the source nodes is to be received by all the destination nodes. The network topology, determined by the connections between said nodes, is assumed to be known. In case of a wired network, a connection corresponds to a physical wire between two nodes. In case of a wireless network, the presence or absence of a connection between two nodes is a function of the radio signal strength perceived by the receiving node. Hence it depends, among others, on the transmission power, transmission and reception antenna characteristics and orientation, the distance, the presence of obstacles or of reflections of radio waves. We assume a link exists between two nodes when radio communication between them can take place in a sufficiently reliable manner, for example when the RSSI ("Received Signal Strength Indication") or the SNR ("Signal to Noise Ratio") reach a predetermined threshold notwithstanding possible rare, temporary perturbations.

Each source node is connected to some, but not necessarily to all, relay nodes and vice versa. Furthermore, each relay node is connected to some, but not necessarily to all destination nodes and vice versa. It is also possible that some source nodes be directly connected to a destination node, said source nodes hence acting as relays for themselves.

The relay nodes are capable of performing so-called "linear network coding" on the data messages received from the source nodes, before forwarding the coded data messages to the destination node. The messages sent by the relay nodes to the destination nodes are linear combinations in a suitable Galois Field of the messages received by the relay nodes from the source nodes. This technique, called "Network Coding", has been proposed to increase the data rate and to efficiently use the network capacity while improving robustness.

Linear network coding consists in considering the data messages to be vectors over a suitable, predetermined Galois Field and calculating linear combinations of said vectors using appropriately chosen scalar coefficients, within each relay node. A destination node $DST_d$, connected to a subset $R_d$ (having a cardinality $N_d$ with $N_d \leq N_{init}$) of the set of relay nodes, receiving said linear combinations can then recover the original data as sent by the source nodes by solving a linear equation system composed of $N_d$ equations with K unknowns. The subsets $R_d$ for different destination nodes $DST_d$ are generally different but overlapping.

Note that solving this system requires that $K \leq N_d$. Note also that said system becomes over-determined if $K < N_d$. A well-known advantage of network coding, as compared to simple routing, is that it allows a more efficient use of the available network bandwidth for transmitting a given information quantity from the source nodes to the destination nodes. It should be noticed that, in a meshed network wherein the connectivity between source nodes and relay nodes is not complete, each relay node can only take into account data originating from the source nodes actually connected to it, in order to calculate the linear combination. In other words, the scalar coefficient "zero" has to be applied to data originating from source nodes not connected to a given relay nodes.

During data transmissions in a network, transmission errors may occur in many different circumstances, as for example in case of radio signal fading due to moving obstacles, or electromagnetic interference. Some of these errors lead to data loss which is immediately detectable by the respective data destination, for example through analysing the RSSI ("Received Signal Strength Indication") or the SNR ("Signal to Noise Ratio"). Other errors lead to random alterations of data symbols at unknown positions, which require the use of dedicated techniques to detect them, as for example parity bits or CRC ("Cyclic redundancy check"). In the context of the meshed network described above, data losses lead to a lowering of the number of equations in the aforementioned linear equation systems that are usable by the destination node, while undetected transmission errors generally render said equation system contradictory. The task of recovering the original data sent by the sources hence becomes difficult.

The patent US 7,380,193 describes a wireless broadcasting network comprising a certain number of source nodes, a certain number of relay nodes each receiving data packets from all source nodes, and a destination node receiving the data from all source nodes as well as from all relay nodes. In order to cope with transmission errors due to fading or signal distortion, this patent proposes that said relay nodes generate parity data for the data received from the source nodes. As an example of said parity data, a Reed-Solomon code is mentioned. However, as stated above, this solution requires a particular, complete connectivity between source nodes, relay nodes and the destination node. Depending on the relative location of said nodes to each other as well as with regard to obstacles masking or reflecting radio waves, attaining such connectivity may not be feasible. Furthermore, the issue of several destination nodes connected to different subsets of the set of relay nodes is not addressed by this patent.

The academic publication of Aditya Ramamoorthy and Andalam Satya Mohan Vamsi (Iowa State University) dated October 5, 2007 "EE 520: Topics in Communications: Network Coding; Lecture 11" describes a 2-layer network wherein a source node has to broadcast a certain number of source data symbols to second-layer destination nodes while passing through a certain number of first-layer relay nodes. The goal of these features is to optimally use the network capacity, which cannot be achieved through simple routing. The proposed solution consists in the source node constructing a Reed-Solomon code word from said source data symbols and transmitting one symbol of said code word to each of the layer-1 relay nodes. Each layer-2 destination node is connected to a sufficiently big number of layer-1 relay nodes, allowing it to recover enough of said code symbols to reconstruct the complete code word and hence the original source data symbols. This solution requires again a complete connectivity between the source node and the relay nodes. Furthermore, it places the burden of encoding onto the single source node and it does not address the issue of managing data broadcasts originating from several source nodes.

Document FR 2 932 630 describes a method and device for constructing a network coding for the transmission of data packets. Data packets are transmitted using a linear correcting code in a mesh communication network comprising source, relay and destination nodes.

The academic publication of Shenghao Yang and Raymond W. Yeung (The Chinese University of Hong Kong - Department of Information Engineering): "Characterizations of Network Error Correction/Detection and Erasure Correction", introduces a theoretical approach to the concept of network Hamming weight depending on connectivity conditions in a meshed network, with the goal of allowing correction of errors and erasures. However, only the case of a single source node is taken into account, and no method of determining suitable network coding coefficients is described, taught or suggested.

Accordingly, it would be advantageous to provide a method for determining network coding coefficients, as well as the corresponding decoding method, not subject to drawbacks and limitations of the known art.

One of the goals of the present invention is to improve the robustness of the data transmission so that, even in the presence of a certain amount of data losses or transmission errors, the original data can be recovered by each destination node.

More particularly, one of the aims of the present invention is to address the problem of connectivity between source nodes and relay nodes as well as between relay nodes and destination nodes not being complete.

According to a first aspect, the present invention relates to a method of transmitting data symbols, by using a linear correcting code in a mesh communication network comprising a plurality of K source nodes, a plurality of $N_{init}$ relay nodes and a plurality of D destination nodes, the method comprising:

- a step of selecting a plurality of N relay nodes among the $N_{init}$ relay nodes as a function of connections existing in said network;
- a step of determining linear combinations of data symbols received from source nodes by the selected relay nodes using the coefficients $\alpha_{ij}$ of a generator matrix A of dimension N*K of said linear error correcting code as a network coding coefficients; and
- a step of transmitting said linear combinations to destination nodes connected to said selected relay nodes.

In accordance with the invention, during the step of selecting, the N selected relay nodes are such that each non-empty subset $S_0$ of size $K_0$ of the set of the K source nodes remains connected to at least $K_0+M$ relay nodes among the N selected relay nodes, M being a predetermined number representing the correcting error capability of the linear correcting code.

Thanks to these features, some relay nodes that - due to their insufficient connectivity - are unable to contribute properly, are eliminated from the network coding process, by selecting other relay nodes, which provides increasing of the error correction capability of some destination nodes.

Moreover, the implementation of the present invention does not require any additional bandwidth consumption for redundancy and no coding overhead for the source nodes, while the calculation performed by the relay nodes is a lightweight linear network coding. The relay nodes generate one common code for all destination nodes with no need for multiple data transmissions (TDMA, FDMA, ...) to individual destination nodes, which optimises the network bandwidth use. The destination nodes may use well-known decoding techniques for correcting transmission errors and erasures, while the same code is used for all destinations.

It should be noted that the connectivity between source nodes and relay nodes does not need to be complete (so that consequently the network coding coefficients at some given positions have to be zero), while the error correction capability of the destination nodes shall be maximised (consequently, the number of permanently fixed erasures applied by a destination node, due to absent links from some of the relay nodes to said destination node, shall be minimised).

In addition, the existence of a network code of correcting capability M is sure.

According to particular features, M is determined by:

- a step of determining, for every non-empty subset $S_0$ of the set of source nodes S, the set $R(S_0)$ of relay nodes connected to at least one member of So, and of determining $n(S_0)$ to be the difference between the cardinality of $S_0$ and the cardinality of $R(S_0)$;

- a step of setting, for each relay node $REL_i$ connected to at least one source node, an associated relay connectivity number $rr_i$ to the smallest one of the values $n(S_0)$ corresponding to all the $R(S_0)$ containing said relay node $REL_i$, and the value $N_{init}-K+1$;
- a step of determining $M = min(rr_i)$, for $i = 1, ..., N_{init}$.

According to particular features, the method of the present invention, as succinctly set forth above, further comprises, in each destination node:

- a step of constructing a word from the linear combinations received from relay nodes where each position in the word is associated with a relay node, and wherein an erased symbol is positioned at each position corresponding to a relay node from which no linear combination has been received; and
- a step of decoding the constructed word to retrieve the data symbols transmitted by the sources nodes.

According to particular features, the step of selecting N relay nodes comprises, for every non-empty subset $S_0$ of the set of source nodes S:

- a first step of eliminating all relay nodes not connected to any source node and
- a second step of eliminating, among the relay nodes remaining after the first step of eliminating, at most n relay nodes $REL_{i1}$, $REL_{i2}$, ..., $REL_{in}$, having associated connectivity numbers $rr_{i1}$, $rr_{i2}$, ..., $r_{in}$ greater than or equal to M+n,

N being the cardinality of the set of the relay nodes remaining after the second step of eliminating.
According to particular features, during the second step of eliminating, relay nodes connected to a minimal number of destination nodes are eliminated first.
According to particular features, during the second step of eliminating, relay nodes not connected to destination nodes for which $N_i = N_{min}$, where $N_{min}$ is the minimum value of $N_i$, are eliminated first.
According to particular features, the transmitted data packets being composed of symbols from a predetermined Galois Field GF, that further comprises the steps of:

- constructing, for the error correcting code, the generator matrix A, of dimension N*K, with coefficients $\alpha_{ij}$ from said Galois Field GF, defined such that each row i corresponds to a relay node and each column j corresponds to a source node, wherein said coefficients are the scalar neutral element for addition, denoted "zero", for each position in the generator matrix that corresponds to a source node and a relay node between which no link exists;
- determining, for each column of said generator matrix, the remaining coefficients so that said column corresponds to a codeword of a linear error correcting code and that all the columns are independent and
- assigning the coefficients of each of the rows to its corresponding relay node, said coefficients being used by said relay node for linear network coding by linearly combining data packets received from source nodes and transmitting the resulting linear combination to a destination node.

According to particular features, the step of constructing said generator matrix comprises, if at least one subset with cardinality c, with $0<c\leq K$, of the set of K sources nodes is connected to less than N-K+c relay nodes, during the step of determining said coefficients, the network is virtually augmented by adding at least one imaginary source node considered to be connected to each relay node.
According to particular features, if M<N-K, K is replaced by an adjusted number $K_{adj}$ equal to N-M, the number of imaginary source nodes being $K_{adj}-K$.
According to particular features, the step of constructing said generator matrix comprises:

- erasing up to h positions of each column of the generator matrix that differ from the positions containing zeros, wherein h is the erasure correcting capacity of the primary error correcting code, h being equal to the minimum Hamming distance of said code minus 1;
- choosing values for coefficients corresponding to positions that differ from those positions containing either zeros or erasures, if any; and
- recovering the erased positions by associating with each column a codeword of the linear error correcting code, wherein the predetermined values are chosen so that all the columns of the generator matrix are linearly independent.

According to particular features, the error correcting code is a Reed-Solomon code of size N and dimension K.
According to particular features, the step of determining said coefficients is performed by one node of the network.
According to a second aspect, the present invention relates to a device for transmitting data symbols, by using a linear correcting code in a mesh communication network comprising a plurality of K source nodes, a plurality of $N_{init}$ relay nodes and a plurality of D destination nodes, the device comprising:

- means for selecting a plurality of N relay nodes among the $N_{init}$ relay nodes as a function of connections existing in said network and
- means for determining linear combinations of data symbols received from source nodes by the selected relay nodes using the coefficients $\alpha_{ij}$ of a generator matrix A of dimension N*K of said linear error correcting code as a network coding coefficients; and
- means for transmitting said linear combinations to destination nodes connected to said selected relay nodes.

In accordance with the invention, the N selected relay nodes are such that each non-empty subset $S_0$ of size $K_0$ of the set of the K source nodes remains connected to at least $K_0$+M relay nodes among the N selected relay nodes, M being a predetermined number representing the correcting error capability of the linear correcting code.

According to a third aspect, the present invention concerns a computer program loadable into a computer system, said program containing instructions enabling the implementation of the method of the present invention, as succinctly set forth above, when that program is loaded and executed by a computer system.

According to a fourth aspect, the present invention concerns an information carrier readable by a computer or a microprocessor, removable or not, storing instructions of a computer program, characterized in that it enables the implementation of the method of the present invention as succinctly set forth above.)

As the advantages, objectives and characteristics of this device, of this computer program and of this information carrier are similar to those of the method, as succinctly set forth above, they are not repeated here.

Other advantages, objectives and features of the present invention will emerge from the following description, given, with an explanatory purpose that is in no way limiting, with respect to the accompanying drawings in which:

- Figure 1 illustrates an example of a meshed network performing linear network coding;
- Figure 2 shows, in the form of a flowchart, steps performed for determining relay connectivity numbers;
- Figures 3a and 3b shows, in the form of flowcharts, steps performed for removing redundant relay nodes;
- Figure 4 illustrates an example of a meshed network with several redundant relay nodes;
- Figure 5 illustrates the meshed network of Figure 4 after removing two redundant relay nodes;
- Figure 6 illustrates the meshed network of Figure 4 after removing three redundant relay nodes;
- Figure 7 illustrates an example of a meshed network with two redundant relay nodes;
- Figure 8 illustrates the meshed network of Figure 7 after removing two redundant relay nodes;
- Figure 9a shows a structure of TDMA ("Time Division Multiple Access") transmission sequence;
- Figure 9b shows a structure of a control packet indicating new network coding coefficients;
- Figure 10 shows a software and hardware architecture of a network node's communication module;
- Figures 11 a and 11 b show, in the form of flowcharts, steps for constructing network coding matrix;
- Figure 12a shows, in the form of a flowchart, steps performed by a relay node for updating coefficients;
- Figure 12b shows, in the form of a flowchart, steps performed by a relay node for receiving, encoding, re-transmitting data;
- Figure 13a shows, in the form of a flowchart, steps performed by a destination node for updating coefficients and
- Figure 13b shows, in the form of a flowchart, steps performed by a destination node for decoding data and solving equations.

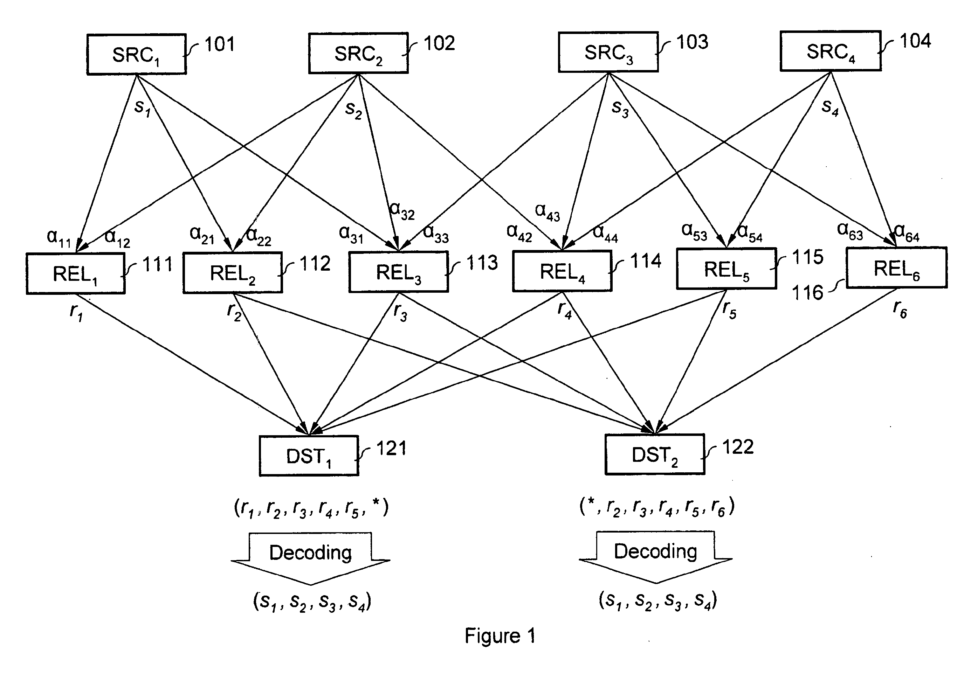

Figure 1 represents an example of a meshed wireless or wired network applying linear network coding. Consider that each of the data packets transmitted within this network is composed of a predetermined, fixed number L of symbols issued from a predetermined Galois Field GF(q), q being the number of elements of said Galois Field. Hence, said packets can be considered as vectors of the linear space $GF(q)^L$. It is well known that the number of elements of a Galois Field is always a power of a prime number p (called the characteristic of the Galois Field), $q = p^m$ for some positive integer m. Due to the binary nature of the data transmitted in digital networks, said prime number p is usually chosen to be equal to 2. Furthermore, as the devices attached to the networks in question usually structure the binary information they process in the form of bytes composed of 8 bits, m is advantageously chosen to be equal to 8. Hence, $q = 2^8 = 256$ and the aforementioned data symbols are identical to bytes. However, it has to be understood that the present invention is not restricted to said choices of p and m. Introducing the structure of a Galois Field onto the data symbols composing data packets has the advantage of enabling the arithmetic operations of addition, subtraction, multiplication, division (except by "0") fulfilling well-known properties of commutativity, associativity, inversibility and distributivity, said operations being useful for the implementation of network coding as well as error correction coding.

Figure 1 shows four source nodes 101, 102, 103, 104, also called, respectively, $SRC_1$, $SRC_2$, $SRC_3$, $SRC_4$, each emitting a data packet called, respectively, $S_1$, $S_2$, $S_3$, $S_4$ to all respective connected relay nodes. Figure 1 also shows six relay nodes 111, 112, 113, 114, 115, 116, also called, respectively, REL, to $REL_6$, each emitting a data packet called, respectively, $r_1$ to $r_6$, determined from the received packets $S_1$ to $S_4$, by a network coding procedure that is described below. Both relay nodes 111 and 112 are connected to the source nodes 101 and 102. Hence, relay nodes 111 and 112 both receive packets $S_1$ and $S_2$. Relay node 113 is connected to the source nodes 101, 102 and 103 and receives the packets $S_1$, $S_2$ and $S_3$. Relay node 114 is connected to the source nodes 102, 103 and 104 and receives the packets $S_2$, $S_3$ and $S_4$. Both relay nodes 115 and 116 are connected to the source nodes 103 and 104. Hence, relay nodes 115 and 116 both receive the packets $S_3$ and $S_4$.

Each relay node $REL_i$ (with i = 1, 2, 3, 4, 5, 6) uses of a set of four scalar "network coding coefficients", denoted $a_{ij}$ (j = 1, 2, 3, 4). In other words, said network coding coefficients are elements of the aforementioned Galois Field GF(q), where the coefficient $a_{ij}$ is associated to the source node $SRC_j$. Whenever no connection exists from a source node $SRC_j$ to a relay node $REL_i$, the corresponding coefficient $a_{ij}$ has to be zero. Each relay node $REL_i$, after reception of each of the source packets issued from the source nodes 4 connected to it, calculates the linear combination

$$r_i = \sum_{j=1}^{4} \alpha_{ij} s_j$$ to determine the data packet $r_i$ to be sent to destination nodes. Note that all data packets are vectors from $GF(q)^L$ and that addition and scalar multiplication of vectors are component-wise. As an example, the relay node 111 $REL_1$ calculates the packet $r_1$ to be emitted as $r_1 = a_{11}s_1 + a_{12}s_2$. Since the source nodes 103 and 104 are not connected to the relay node 111, the coefficients $\alpha_{13}$ and $\alpha_{14}$ are equal to zero and the packets $s_3$ and $s_4$, not available to said relay node 111, are not taken into account during the calculation of the linear combination.

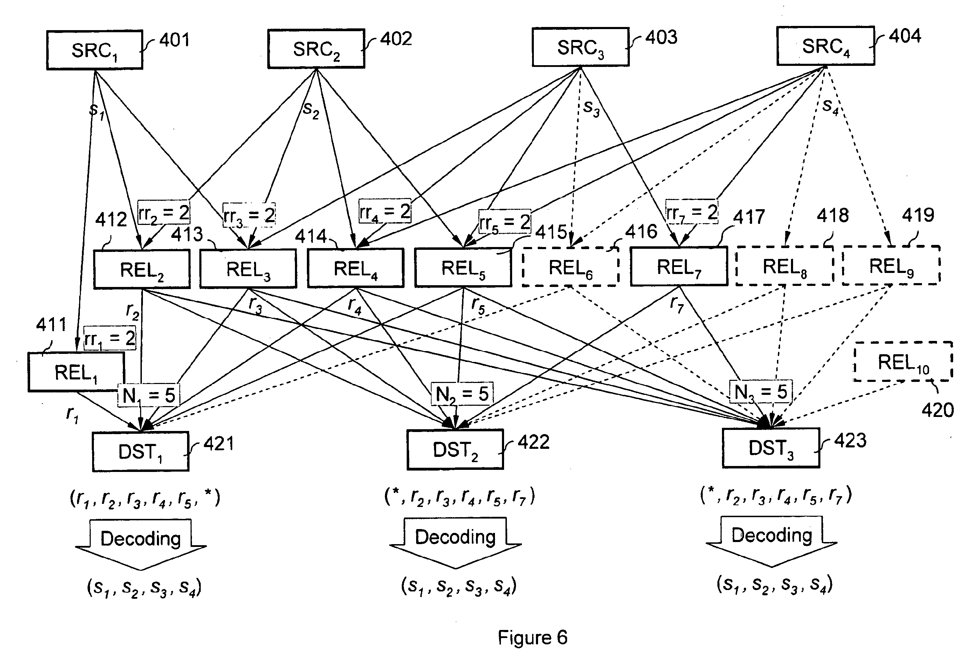

A more detailed implementation example for the operation of relay nodes is described with regards to Figure 6.

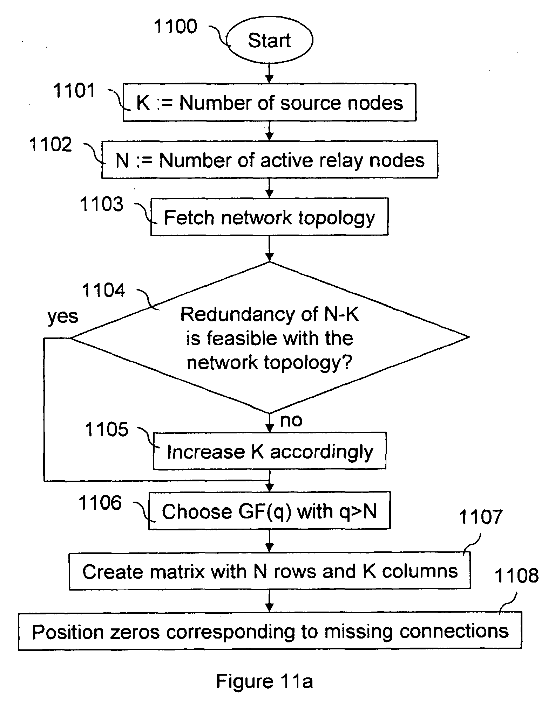

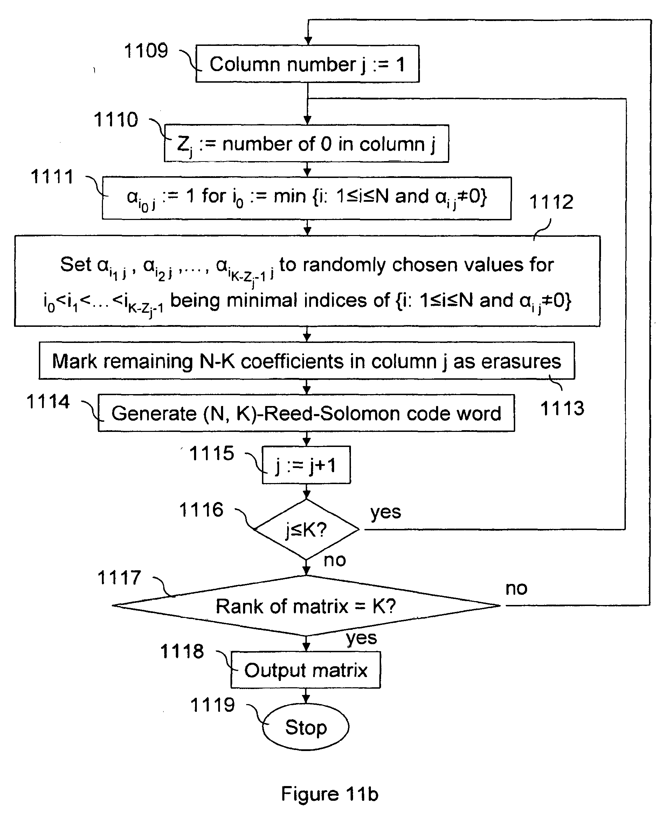

Figure 1 also shows two destination nodes 121 and 122, also called, respectively, $DST_1$ and $DST_2$. Destination node 121 is connected to the relay nodes 111 to 115 and receives the (possibly erroneous) data packets $r_1$ to $r_5$. The destination node 122 is connected to the relay nodes 112 to 116 and receives the (possibly erroneous) data packets $r_2$ to $r_6$. The packets $r_i = (P_{i1}, P_{i2}, ..., p_{iL})$ for i = 1,...,6 can bee seen as vectors of the linear space $GF(q)^L$. As it is described with regards to Figures 11 a and 11 b, thanks to the choice of the network coding coefficients $a_{ij}$, each of the symbol strings of the form $(P_{1h}, P_{2h}, P_{3h}, P_{4h}, P_{5h}, P_{6h})$ for h = 1, 2, ..., L obtained from said data packets forms a code word of a 4-dimensional linear error correcting code, as for example a (6,4)-Reed-Solomon code.

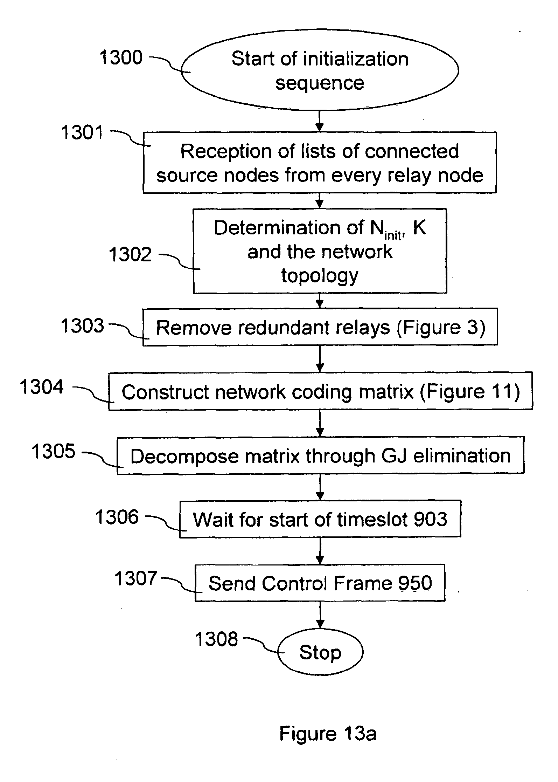

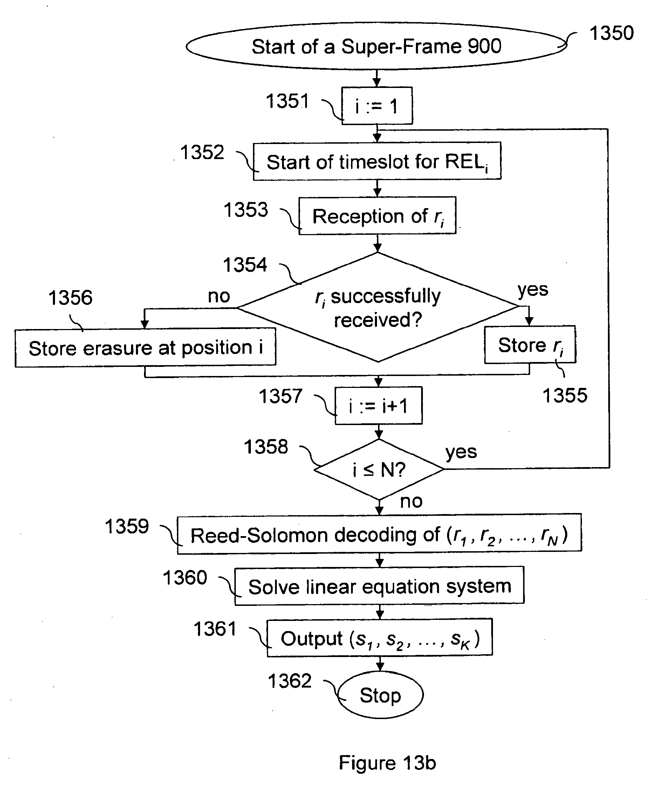

The destination node 121 corrects possible transmission errors using this error correction code (considering the symbols of the missing packet $r_6$ as erasure, marked by an '*' in the Figure) and recovers the original source packets six, $S_2$, $S_3$, $S_4$ from the corrected data of the received packets $r_1$ to $r_6$ by solving the linear equation system describing the network coding. The destination node 122 proceeds in a similar manner (considering the symbols of the missing packet $r_1$ as erasure, marked by an '*' in the Figure, for the purpose of error correction). The operation of the destination nodes 121 and 122 is described with regards to Figures 13a and 13b.

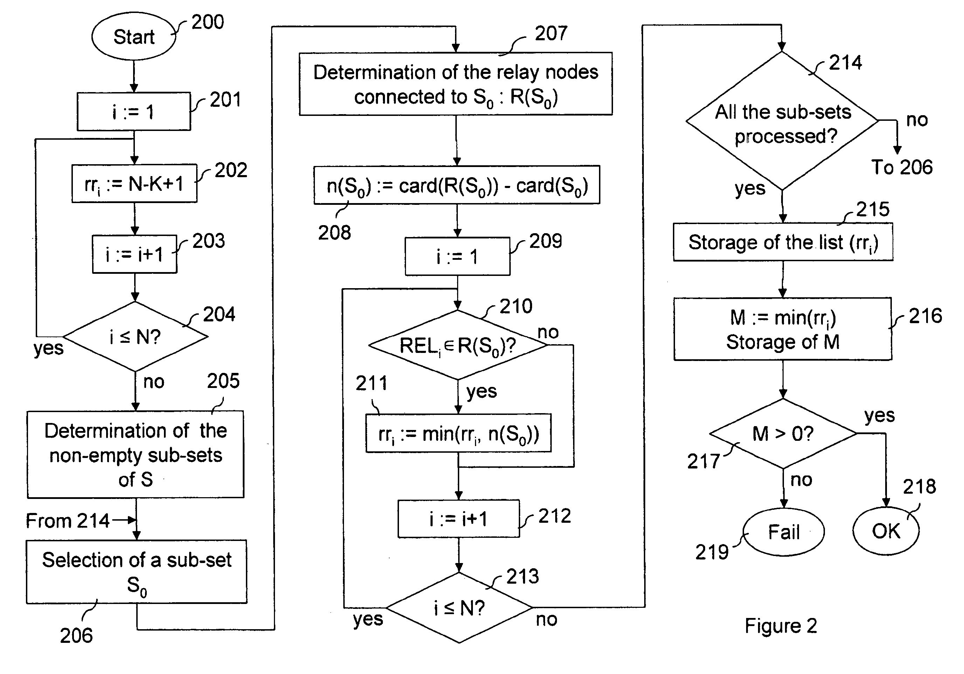

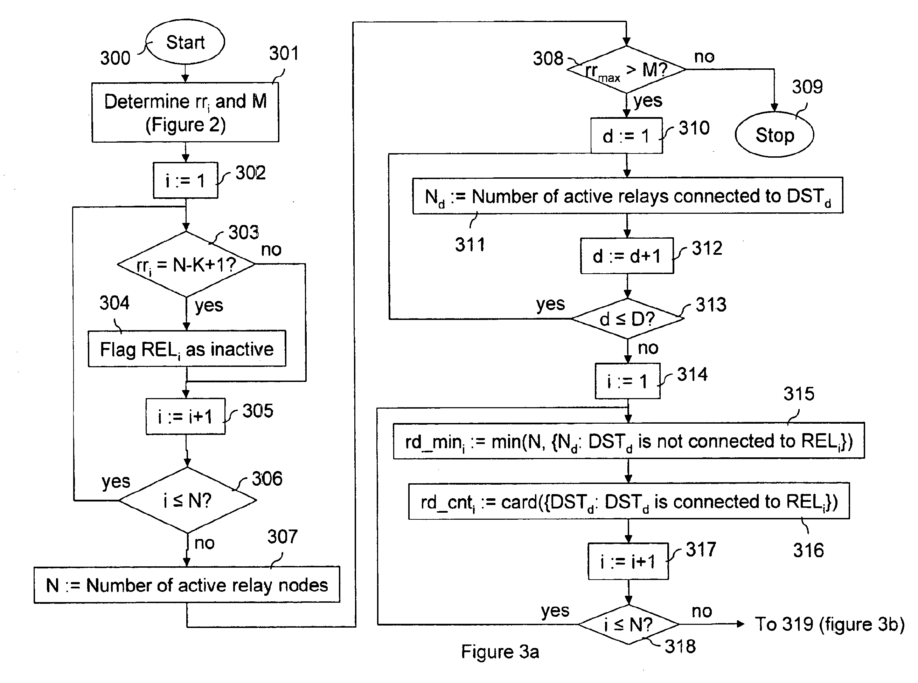

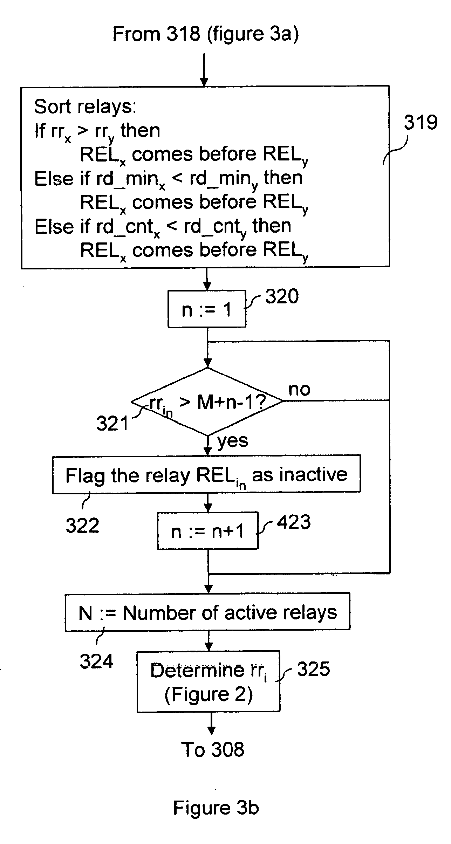

Figure 2 shows steps for determining the global network coding capability M reachable with the given number K of source nodes and $N_{init}$ relay nodes and the given connectivity between them (note that if $M \leq 0$, the connectivity is too limited to allow implementing network coding). Figure 2 also shows steps for determining a so-called "connectivity number", denoted "$rr_i$", associated with each relay node RELi (i = 1, 2, ..., N), said connectivity number indicating whether or not some relay nodes can be removed from the network without impacting the global network coding capability M. The algorithm of Figure 2 is an auxiliary procedure for the algorithm that is described with regards to Figures 3a and 3b. The former is called, in particular, during steps 301 and 325 of the later.

During a step 201, relay counter i is initialised to 1. During a step 202, a connectivity number $rr_i$ is initialised to $N_{init}$-K+1 for each relay node $REL_i$. During a step 203, the relay counter i is incremented by 1. During a step 204, it is determined if the relay counter i is smaller or equal to $N_{init}$. If $i \leq N_{init}$, step 202 is proceeded to. Otherwise a step 205 is proceeded to. During step 205, the non-empty subsets So of the set S of the K source nodes are determined. Note that there are $2^K$-1 such subsets $S_o$. During a step 206, one subset $S_o$ of said set S is selected.

During a step 207, the subset $R(S_0)$ of the $N_{init}$ relay nodes, that are each connected to at least one of the source nodes in the subset $S_o$ is determined. During a step 208, $n(S_0)$ is determined as the difference between the cardinality of the subset $R(S_0)$ and the cardinality of the subset $S_o$. During a step 209, the relay counter i is initialized to "1" again. During a step 210, it is determined if the relay node $REL_i$ is an element of the subset $R(S_0)$. If yes, a step 211 is proceeded to. Otherwise, a step 212 is proceeded to.

During step 211, $rr_i$ is set to the smaller one of the previous value of $rr_i$ and the value of $n(S_0)$ as determined above. Next, during step 212, the relay counter i is incremented by 1. During a step 213, it is determined if said relay counter i is less or equal to N. If $i \leq N$, step 210 is proceeded to. Otherwise, a step 214 is proceeded to.

During step 214 it is determined if all the subsets $S_o$ have been processed. If not, step 206 is proceeded to, to select another, not yet processed subset $S_o$. Steps 206 to 214 are hence repeated for each non-empty subset $S_o$ of S. If all the subsets $S_o$ of S have been processed, during a step 215, the list of the previously determined values $rr_1$, $rr_2$, ...,

$rr_{Ninit}$ is stored in a memory for the purpose of further processing as described with regards to Figures 3a and 3b.

Note that $rr_i = N_{init}-K+1$ if and only if the associated relay node $REL_i$ is not connected to any one of the source nodes. Otherwise $rr_i \leq N_{init}-K$ since step 211 has been performed for $REL_i$ with $S_o = S$, for which $n(S_0) = n(S) = N_{init}-K$.

During a step 216, the value of the global network coding capability M is set to the smallest value of $rr_1$, $rr_2$, ..., $rr_{ninit}$ and stored in memory. During a step 217, it is determined if the value M is strictly positive. If yes, network coding is, in principle, possible in the given network (provided that the connectivity between the relay nodes and the destination nodes is also sufficient) and the algorithm terminates with a success notification, during a step 218. Otherwise the algorithm terminates with a failure notification, during a step 219.

Figures 3a and 3b illustrate the algorithm of designating a relay node that can be removed (consisting in switching it into an "inactive" state) for selecting N remaining relay nodes without degrading the global error correction capability of any destination node, and even improving said error correction capability for some of the destination nodes.

It is reminded here that, for a hypothetic destination node connected to each one of the $N_{init}$ relay nodes, there exists a network code of redundancy M (where M with $M \leq N_{init}-K$ is determined as described with regards to Figure 2).

In the case of an MDS ("Maximum Distance Separable") code, as for example a Reed-Solomon code, the minimum distance of such a code equals M+1 and it is possible to correct E errors and F erasures as long as $2*E+F \leq M$. If we consider a destination node $DST_d$ connected only to $N_d$ among the $N_{init}$ relay nodes, as shown for example on Figure 1, this destination node receives only $N_d$ data symbols of the code words having length $N_{init}$. This destination node flags the missing $N_{init}-N_d$ data symbols as erasures for the purpose of error correction. Consequently, said destination node can correct E errors and $F_s$ supplementary erasures (corresponding to the missing or erroneous data reception, detected for example through verifying SNR or RSSI) as long as $2*E+N_{init}-N_d+F_s \leq M$ (or $2*E+F_s \leq M-N_{init}+N_d$). The value $M-N_{init}+N_d$ is called the "effective error correction capacity" of the destination node $DST_d$. Thus, we must have $M-N_{init}+N_d > 0$ (or $M > N_{init}-N_d$) in order to implement network coding.

$M = N_{init}-N_d$ corresponds to a situation where the destination $DST_d$ still can correctly recover the source data if no transmission error occurred, but where destination node $DST_d$ cannot detect or correct any error or supplementary erasure. If $M < N_{init}-N_d$, any source data recovery becomes impossible.

In many cases, when $M < N_{init}-K$, removing some of the relay nodes from the network does not reduce the global network error correction capability M. However, removing relay nodes by definition decreases the number of relay nodes, here from $N_{init}$ to N. For a given destination node $DST_d$, two cases are possible. In the first one, we remove a relay node that was connected to said destination node and hence we decrease both N and $N_d$ by one. Consequently, the effective error correction capacity $M\_\_N+N_d$ of $DST_d$ remains the same. In the second case, we remove a relay node that was not connected to said destination node, hence we decrease $N_{init}$ by one but without changing $N_d$. Consequently, the effective error correction capacity $M-N+N_d$ of $DST_d$ is increased by one. In other words, the code is shortened while keeping the same global error correction capacity M, but the number of predetermined erasures $N-N_d$ to be applied by destination $DST_d$ decreases, which increases the effective error correction capacity. S., an efficient choice of relay nodes to be removed may enable the construction of a network coding scheme letting all destination nodes benefit from error correcting capabilities, where such a scheme did not exist prior to the removal of relay nodes.

The algorithm described with regards to Figures 3a and 3b has the goals of:

- selecting relay nodes as removable if removing them does not decrease the global network error correction capacity M,
- among these removable relay nodes, selecting first the nodes the removal of which increases the minimal effective error correction capacity of the destinations node, i.e., the minimum value of $M-N+N_d$ for d = 1, 2, ..., D and
- selecting first the relay nodes the removal of which maximises the number of destination nodes seeing an increase of their effective error correction capacity.

During a step 301, the flags relating to all the relay nodes are set to "active", which means that they are not yet removable, $rr_i$ and M are determined, as described with regards to Figure 2. Steps 302 to 306 have the purpose of removing the relay nodes that are not connected to any source nodes since they clearly can't contribute to network coding. During step 302, the relay counter i is initialized to "1 ". During step 303, it is determined if $rr_i$ equals N-K+1. Note that N still equals the total number of relay nodes present in the network, $N_{init}$. If yes, during step 304, the relay node $REL_i$ is flagged as "inactive", meaning that it is removed. Otherwise, during step 305, the relay counter i is incremented by one. During step 306, it is determined if $i \leq N_{init}$.

If yes, step 303 is proceeded to. Hence steps 303 to 306 are performed for each value of i between 1 and $N_{init}$. Otherwise, during a step 307, N is set to the number of the relay nodes that still remain active at this point. During a step 308, it is determined if there remain at least one other relay node that may be removable. Such a node has an associated connectivity number $rr_i > M$. If yes, step 310 is proceeded to. Otherwise, i.e., if $rr_i = M$ for each remaining relay node, the algorithm stops with a step 309.

During step 310, a destination counter "d" is initialized to 1. During a step 311, a variable "$N_d$" is set to the number of relay nodes still flagged as "active" that are connected to the destination node $DST_d$. During a step 312, the relay counter "d" is incremented by one. During a step 313, it is determined if $d \leq$, D being the number of destination nodes. If yes, step 311 is proceeded to. Hence, steps 311 to 313 are performed for each value of "d" between 1 and D. Otherwise, during a step 314, a relay counter "i" is initialized to 1. During a step 315, a variable "$rd\_min_i$" associated to the relay node $REL_i$ is set to the smallest one of the values "$N_d$" corresponding to the destination nodes $DST_d$ that are not connected to said relay $REL_i$, or to N if all destinations are connected to $REL_i$.

During a step 316, a variable "$rd\_cnt_i$" is set to the number of destination nodes $DST_d$ that are connected to said relay node $REL_i$. During a step 317, the relay counter "i" is incremented by one. During a step 318, it is determined if $i \leq N$. If yes, step 315 is proceeded to. Hence, steps 315 to 318 are performed for each value of "i" between 1 and N. Otherwise, during a step 319 (Figure 3b), the relay nodes are sorted according to the following criteria:

- If $rr_x > rr_y$ then $REL_x$ comes before $REL_y$;
- else (i.e., if $rr_x = rr_y$) if $rd\_min_x < rd\ min_y$ then $REL_x$ comes before $REL_y$;
- else (i.e., if $rr_x\ rr_y$ and $rd\_min_x = rd\_min_y$) if $rd\ cnt_x < rd\_cnt_y$ then $REL_x$ comes before $REL_y$;
- else (i.e., if $rr_x = rr_y$ and $rd\_min_x = rd\_min_y$ and $rd\_cnt_x = rd\_cnt_y$) the order is fixed arbitrarily.

At the end of step 319, a sorted list of relay nodes ($REL_{i1}$, $REL_{i2}$, ..., $REL_{iN}$) is obtained. During a step 320, a counter "n" serving as index into said sorted list, is initialised to "1". During a step 321, it is checked if $rr_{in}$ (the relay connectivity number associated to the $n^{th}$ relay in the sorted list $REL_{in}$) is greater than M+n-1. If yes, a step 322 is proceeded to. Otherwise, a step 324 is proceeded to. During step 322, said relay $REL_{in}$ is flagged as "inactive". During a step 323, the counter n is incremented by one and step 321 is proceeded to. Consequently, steps 321 to 323 are repeated as long as the relay connectivity number $rr_{in}$ of the next relay to be removed $REL_{in}$ is greater than M plus the number of relay nodes already removed during this loop. Removing a relay node $REL_{in}$ having a connectivity number $rr_{in} > M$ does not decrease $rr_{min} = M$ but may decrease by one the relay connectivity number $rr_j$ of some relay nodes $REL_j$, if $rr_j > M$. The loop condition 321 ensures that, for none of the relay nodes, the associated connectivity number $rr_j$ becomes less than M.

During step 324, N is recalculated as the number of relay nodes that still remain active. During a step 325, the new values of $rr_i$ is determined for each of the N relay nodes remaining active, as described with regards to Figure 2. It has to be noted that M does not change here. Step 308 is then proceeded to. Consequently, steps 308 to 325 are repeated as long as there remain redundant relay nodes to remove.

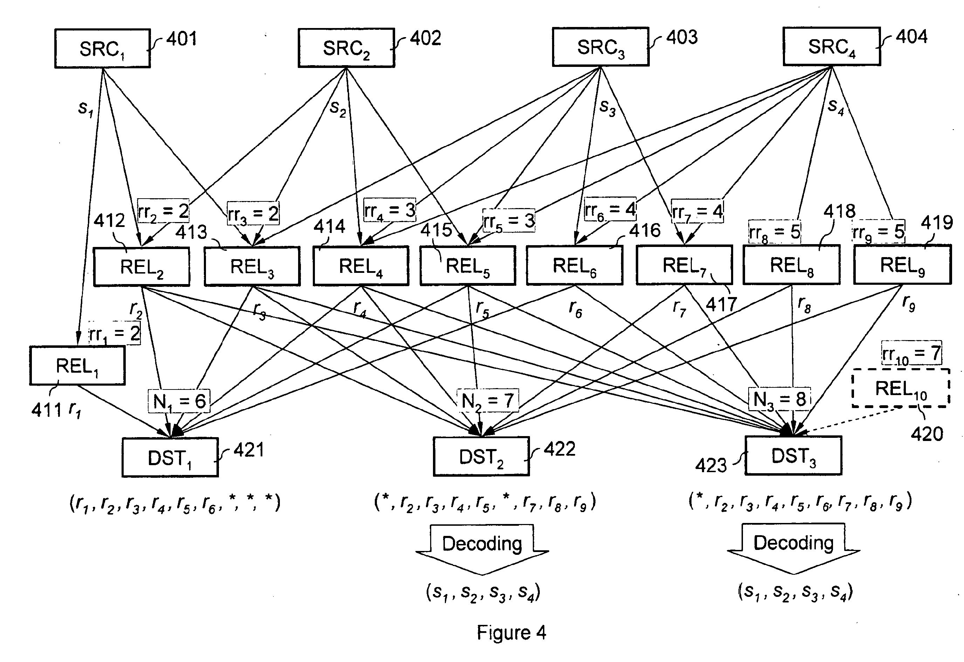

Figure 4 represents an example of a meshed wireless or wired network applying linear network coding, similarly to the network presented with regards to Figure 1. However, this network contains redundant relay nodes so that the implementation of the algorithms presented with regards to Figures 2 and 3 can be illustrated. Figure 4 shows the situation when the "preparation steps" 300 to 307 of the algorithm of Figures 3a and 3b are already carried out, as well as steps 308 to 318 (determination of $N_d$, $rd\_min_i$ and $rd\_cnt_i$) of the first iteration of the algorithm's main loop constituted of steps 308 to 325.

The error-correcting code - a (9, 7)-Reed-Solomon code - and the transmitted packets are shown here for sake of illustration only, in the hypothetical case where said algorithm would prematurely bail out from said loop at said point, before determining, distributing and using the network coding coefficients ($a_{ij}$) according to Figures 11a, 11b, 12a, 12b, 13a and 13b.

In detail, Figure 4 shows four source nodes 401, 402, 403 and 404, also called, respectively, SRC, to $SRC_4$. Each source node emits a data packet, denominated, respectively, $S_1$ to $S_4$, to all respective connected relay nodes.

Figure 4 also shows ten relay nodes 411 to 420, also called, respectively, REL, to $REL_{10}$. Each one of the relay nodes 411 to 419 emits a data packet denominated, respectively, $r_1$ to $r_9$, determined from the received packets $S_1$ to $S_4$, by means of the network coding procedure, i.e., by calculating linear combinations using network coding coefficients ($a_{ij}$) where $a_{ij} = 0$ whenever a connection from source node $SRC_j$ to relay node $REL_i$ does not exist. Each relay node $REL_i$, after reception of each of the source packets issued from the source nodes connected to it, calculates the linear combination to determine the data packet $r_i$ to be emitted. The connectivity between the source nodes 401 to 404 (and more generally, between the non-empty sub-sets $S_o$ of the set of source nodes S, as they are enumerated by steps 205 and 206 of the algorithm described with regards to Figure 2) and the relay nodes 411 to 420 is detailed in table 1 below.

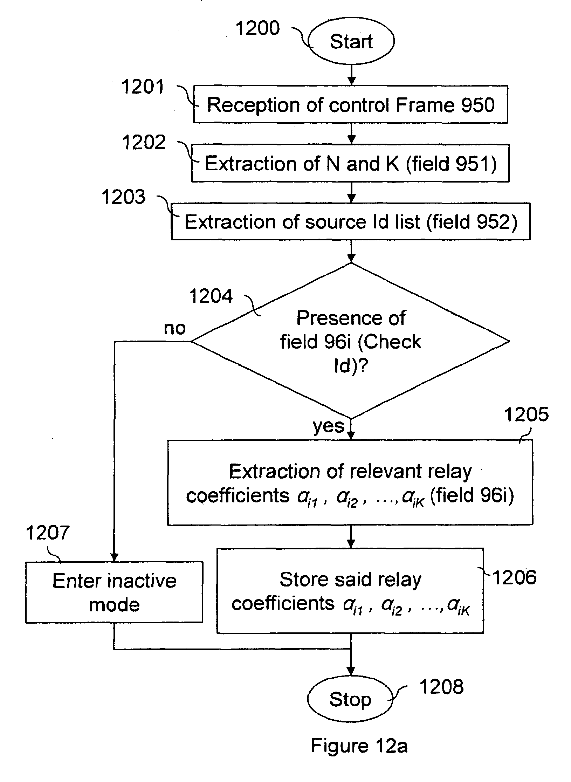

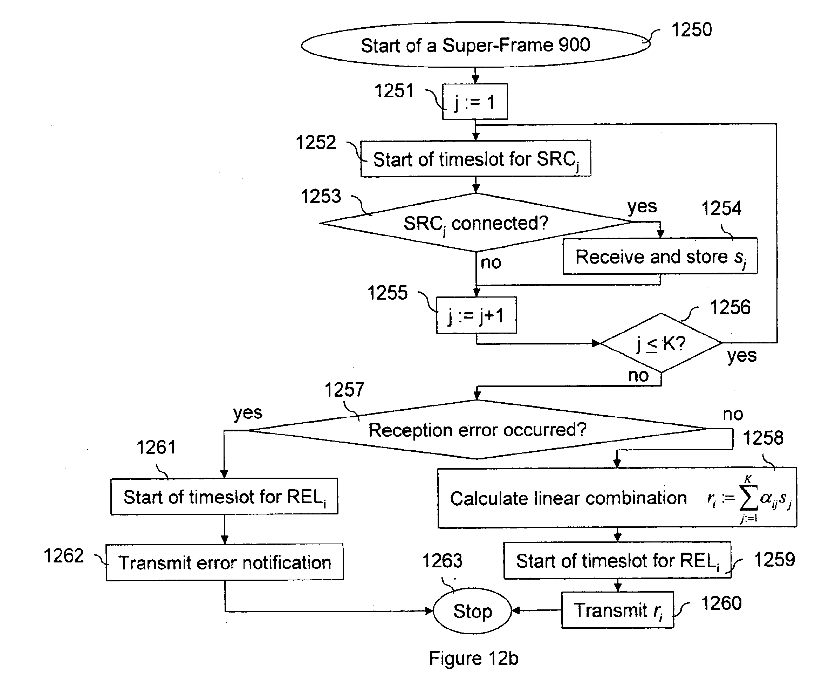

This table 1 also shows the cardinalities of the sets $S_o$ and $R(S_o)$ as well as $n(S_o)$ as determined by steps 207 and 208 of said algorithm. The connectivity between the source nodes and the relay nodes obviously determines which relay node receives which of the source data packets $S_1$, $S_2$, $S_3$, $S_4$. A more detailed implementation example for the operation of the relay nodes is described with regards to Figures 12a and 12b. Relay node 420 is not connected to any one of the source nodes, consequently it has an $rr_{10}=7$ and it has already been flagged as "inactive" during step 304 of the algorithm described with regards to Figures 3a and 3b.

Figure 4 also shows three destination nodes 421, 422 and 423, also called, respectively, $DST_1$, $DST_2$ and $DST_3$. Destination node 421 is connected to the $N_1=6$ relay nodes 411, 412, 413, 414, 415 and 416. It receives the (possibly erroneous) data packets $r_1$, $r_2$, $r_3$, $r_4$, $r_5$ and $r_6$. Destination node 422 is connected to the $N_2$=7 relay nodes 412, 413, 414, 415, 417, 418 and 419. It receives the (possibly erroneous) data packets $r_2$, $r_3$, $r_4$, $r_5$, $r_7$, $r_8$ and $r_9$. The destination node 423 is connected to the $N_3$=8 active relay nodes 412, 413, 414, 415, 416, 417, 418 and 419 (as 420 is inactive). It receives the (possibly erroneous) data packets $r_2$, $r_3$, $r_4$, $r_5$, $r_6$, $r_7$, $r_8$ and $r_9$. $N_1$, $N_2$ and $N_3$ are determined during steps 310 to 313.

The packets $r_i$ = ($p_{i1}$, $P_{i2}$, ..., $P_{iL}$) for i = 1,...,9 can bee seen as vectors of the linear space $GF(q)^L$. As explained more in detail with regards to Figures 11 a and 11 b, thanks to the choice of the network coding coefficients $a_{ij}$, each of the symbol strings of the form ($P_{1h}$, $P_{2h}$, $P_{3h}$, $P_{4h}$, $P_{5h}$, $P_{6h}$, $P_{7h}$, $P_{8h}$, $P_{9h}$) for h = 1, 2, ..., L obtained from said data packets forms a code word of a 7-dimensional linear error correcting code, as for example a (9, 7)-Reed-Solomon code.

The destination node 421 cannot recover the original source packets $S_1$ to $S_4$ from the received packets $r_1$ to $r_6$ (considering the symbols of the missing packets $r_7$, $r_8$, $r_9$ as erasures, marked by an '*' in the Figure) under any circumstances, since three erasures are too many for a code with the redundancy of two. The destination node 422 correctly recovers the original source packets $S_1$ to $S_4$ from the received packets $r_2$ to $r_9$ (considering the symbols of the missing packets $r_i$ and $r_6$ as erasures, marked by an '*' in the Figure) only if no transmission error or supplementary erasure occurs, since, with two predetermined erasures, no effective error correction capability remains (miscorrection would occur in case of undetected transmission errors unless supplementary measures are taken). The destination node 423 correctly recovers the original source packets $S_1$ to $S_4$ from the received packets $r_2$ to $r_9$ (considering the symbols of the missing packet $r_1$ as erasure, marked by an '*' in the Figure) with the capability of correcting one supplementary erasure or of detecting (although not correcting) one error, since the effective error correction capability with one predetermined erasure equals one.

The operation of the destination nodes 421, 422 and 423 is described more in detail with regards to Figures 13a and 13b.

Table 1: Source node subsets and their connectivity to relay nodes for Figure 4

| $S_0$ | card($S_0$) | R($S_0$) | card(R($S_0$)) | n($S_0$) |
|---|---|---|---|---|
| {SRC$_1$} | 1 | {REL$_1$, REL$_2$, REL$_3$} | 3 | 2 |
| {SRC$_2$} | 1 | {REL$_2$, REL$_3$, REL$_4$, REL$_5$} | 4 | 3 |
| {SRC$_3$} | 1 | {REL$_3$, REL$_4$, REL$_5$, REL$_6$, REL$_7$} | 5 | 4 |
| {SRC$_4$} | 1 | {REL$_4$, REL$_5$, REL$_6$, REL$_7$, REL$_8$, REL$_9$} | 6 | 5 |
| {SRC$_1$, SRC$_2$) | 2 | {REL$_1$, REL$_2$, REL$_3$, REL$_4$, REL$_5$} | 5 | 3 |
| {SRC$_1$, SRC$_3$} | 2 | {REL$_1$, REL$_2$, REL$_3$, REL$_4$, REL$_5$, REL$_6$, REL$_7$} | 7 | 5 |
| {SRC$_1$, SRC$_4$} | 2 | {REL$_1$, REL$_2$, REL$_3$, REL$_4$, REL$_5$, REL$_6$, REL$_7$, REL$_8$, REL$_9$} | 9 | 7 |
| {SRC$_2$, SRC$_3$} | 2 | {REL$_2$, REL$_3$, REL$_4$, REL$_5$, REL$_6$, REL$_7$} | 6 | 4 |
| {SRC$_2$, SRC$_4$} | 2 | {REL$_2$, REL$_3$, REL$_4$, REL$_5$, REL$_6$, REL$_7$, REL$_8$, REL$_9$} | 8 | 6 |
| {SRC$_3$, SRC$_4$} | 2 | {REL$_3$, REL$_4$, REL$_5$, REL$_6$, REL$_7$, REL$_8$, REL$_9$} | 7 | 5 |
| {SRC$_1$, SRC$_2$, SRC$_3$} | 3 | {REL$_1$, REL$_2$, REL$_3$, REL$_4$, REL$_5$, REL$_6$, REL$_7$} | 7 | 4 |
| (SRC$_1$ SRC$_2$, SRC$_4$} | 3 | {REL$_1$ REL$_2$, REL$_3$, REL$_4$, REL$_5$, REL$_6$, REL$_7$, REL$_8$, REL$_9$) | 9 | 6 |
| {SRC$_1$, SRC$_3$, SRC$_4$} | 3 | {REL$_1$, REL$_2$, REL$_3$, REL$_4$, REL$_5$, REL$_6$, REL$_7$, REL$_8$, REL$_9$) | 9 | 6 |
| {SRC$_2$, SRC$_3$, SRC$_4$} | 3 | {REL$_2$, REL$_3$, REL$_4$, REL$_5$, REL$_6$, REL$_7$, REL$_8$, REL$_9$} | 8 | 5 |
| {SRC$_1$ SRC$_2$, SRC$_3$, SRC$_4$} | 4 | {REL$_1$, REL$_2$, REL$_3$, REL$_4$, REL$_5$, REL$_6$, REL$_7$, REL$_8$, REL$_9$} | 9 | 5 |

The Table 2 below illustrates the connectivity between the relay nodes and the destination nodes, the relay connectivity numbers $rr_i$ determined by the algorithm described with regards to Figure 2 (using the values n($S_0$) as shown in Table 1) and the values rd_min$_i$ and rd_cnt$_i$ as determined in the first iteration of steps 315 and 316. M=$_2$ is the smallest one of the values $rr_1$ to $rr_9$. Sorting the relay nodes REL$_1$ to REL$_9$ according to step 319 yields the order [REL$_9$, REL$_8$,

REL$_7$, REL$_6$, REL$_5$, REL$_4$, REL$_1$, REL$_3$, REL$_2$]. Note that the orders between REL$_8$ and REL$_9$, between REL$_5$ and REL$_4$ and between REL$_3$ and REL$_2$ are arbitrary ones. The loop composed of steps 320 to 323 yields in flagging the first two relays on this sorted list, REL$_9$ and REL$_8$, as inactive. For the third relay, REL$_7$, the condition of step 321 is not longer fulfilled since rr$_7$=4, M=2 and n=3.

Table 2: Connectivity between relay nodes and destination nodes for Figure 4

| Relay REL$_i$ | REL$_1$ | REL$_2$ | REL$_3$ | REL$_4$ | REL$_5$ | REL$_6$ | REL$_7$ | REL$_8$ | REL$_9$ | REL$_{10}$ |
|---|---|---|---|---|---|---|---|---|---|---|
| rr$_i$ | 2 | 2 | 2 | 3 | 3 | 4 | 4 | 5 | 5 | 7 |
| Connected to DST$_i$ with i= | 1 | 1 | 1 | 1 | 1 | 1 | 2 | 2 | 2 | 3 |
| | | 2 | 2 | 2 | 2 | 3 | 3 | 3 | 3 | |
| | | 3 | 3 | 3 | 3 | | | | | |
| rd_cnt$_i$ | 1 | 3 | 3 | 3 | 3 | 2 | 2 | 2 | 2 | * |
| rd_min$_i$ | 7 | 9 | 9 | 9 | 9 | 7 | 6 | 6 | 6 | * |

\* means "not determined"

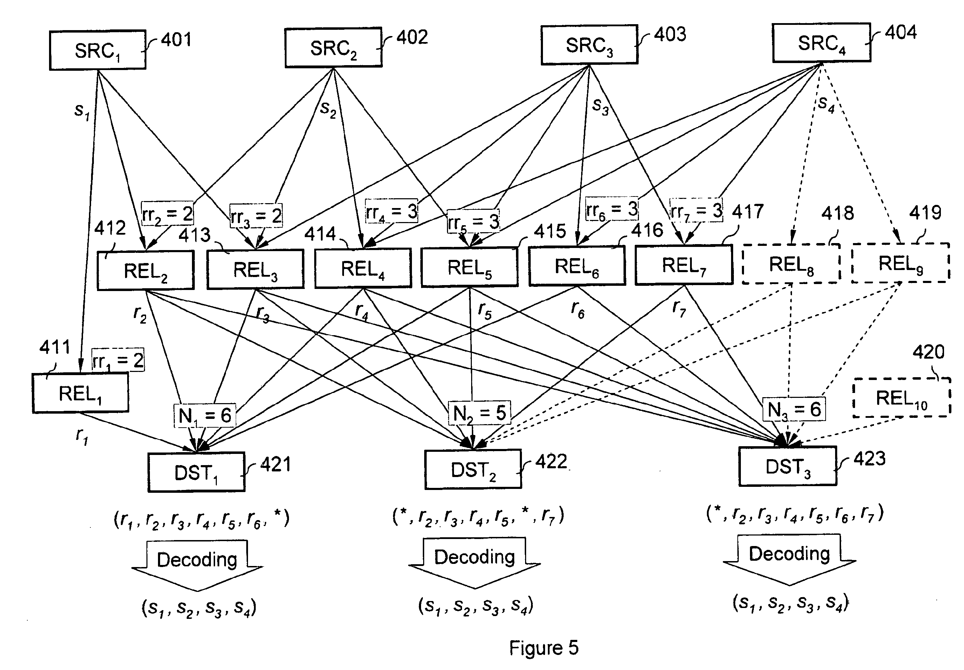

Figure 5 shows the same network as Figure 4, but in a later stage of executing the algorithm described with regards to Figures 3a and 3b. More precisely, it shows the situation when both the "preparation steps" 300 to 307 of said algorithm and the first iteration of the algorithm's main loop (constituted of steps 308 to 325) are already carried out, as well as steps 308 to 318 (determination of N$_d$, rd_min$_i$ and rd_cnt$_i$) of the second iteration of said loop. As already stated above, relay nodes REL$_8$ and REL$_9$ have been flagged as inactive during said first iteration. The error-correcting code - a (7, 5)-Reed-Solomon code - and the transmitted packets are shown here for sake of illustration only, in the hypothetical case where said algorithm would prematurely bail out from said loop at the said point, before determining, distributing and using the network coding coefficients (a$_{ij}$) according to Figures 11a, 11b, 12a, 12b, 13a and 13b. The error correction code has been shortened by 2 while keeping its redundancy of 2. This results in a considerable improvement for the destination node 421: even if it still receives only packets r$_i$, r$_2$, r$_3$, r$_4$, r$_5$ and r$_6$, it has to apply only one predetermined erasure (corresponding to packet r$_7$). Thus destination node 421 can not only recover the original source packets s$_1$, S$_2$, S$_3$ and S$_4$ but it can even correct one supplementary erasure or detect (although not correct) one error.
For the destination nodes 422 and 423, the number of predetermined erasures (and hence the effective error correction capabilities) is not changed by the code shortening, as compared to Figure 4.
Table 3 below shows the updated connectivity between the four source nodes and the remaining seven active relay nodes, together with the cardinalities of the sets So, and R(S$_0$) as well as n(S$_0$) as determined by steps 207 and 208 of the algorithm described with regards to Figure 2.
Table 4 below illustrates the connectivity between the active seven relay nodes and the destination nodes, the relay connectivity numbers rr$_i$ determined by the algorithm described with regards to Figure 2, using the values n(S$_0$) as shown in Table 3, and the values rd_min$_i$ and rd_cnt$_i$ as determined in the second iteration of steps 315 and 316. M = 2 is the smallest one of the values rr$_i$, rr$_2$, ..., rr$_7$. Sorting the relay nodes REL$_1$ to REL$_7$ according to step 319 yields the order [REL$_6$, REL$_7$, REL$_5$, REL$_4$, REL$_1$, REL$_3$, REL$_2$]. Note that the orders between REL$_4$ and REL$_5$ and between REL$_3$ and REL$_2$ are arbitrary ones. The loop composed of steps 320 to 323 yields in flagging the first relay on this sorted list, REL$_6$ as inactive. For the second relay REL$_7$ the condition of step 321 is not longer fulfilled since rr$_7$=3, M=2 and n=2.

Table 3: Source node subsets and their connectivity to relay nodes for Figure 5.

| S$_0$ | card(S$_0$) | R(S$_0$) | card(R(S$_0$)) | n(S$_0$) |
|---|---|---|---|---|
| {SRC$_1$} | 1 | {REL$_1$, REL$_2$, REL$_3$} | 3 | 2 |
| {SRC$_2$} | 1 | {REL$_2$, REL$_3$, REL$_4$, REL$_5$) | 4 | 3 |
| {SRC$_3$} | 1 | {REL$_3$, REL$_4$, REL$_5$, REL$_6$, REL$_7$) | 5 | 4 |
| {SRC$_4$} | 1 | {REL$_4$, REL$_5$, REL$_6$, REL$_7$} | 4 | 3 |
| {SRC$_1$, SRC$_2$} | 2 | {REL$_1$, REL$_2$, REL$_3$, REL$_4$, REL$_5$) | 5 | 3 |
| {SRC$_1$, SRC$_3$) | 2 | (REL$_1$, REL$_2$, REL$_3$, REL$_4$, REL$_5$, REL$_6$, REL$_7$} | 7 | 5 |
| {SRC$_1$, SRC$_4$} | 2 | {REL$_1$, REL$_2$, REL$_3$, REL$_4$, REL$_5$, REL$_6$, REL$_7$} | 7 | 5 |
| {SRC$_2$, SRC$_3$) | 2 | {REL$_2$, REL$_3$, REL$_4$, REL$_5$, REL$_6$, REL$_7$) | 6 | 4 |
| {SRC$_2$, SRC$_4$} | 2 | {REL$_2$, REL$_3$, REL$_4$, REL$_5$, REL$_6$, REL$_7$) | 6 | 4 |
| {SRC$_3$, SRC$_4$) | 2 | {REL$_3$, REL$_4$, REL$_5$, REL$_6$, REL$_7$) | 5 | 3 |

(continued)

| $S_0$ | card($S_0$) | $R(S_0)$ | card($R(S_0)$) | $n(S_0)$ |
|---|---|---|---|---|
| {SRC$_1$, SRC$_2$, SRC$_3$) | 3 | {REL$_1$, REL$_2$, REL$_3$, REL$_4$, REL$_5$, REL$_6$, REL$_7$) | 7 | 4 |
| {SRC$_1$, SRC$_2$, SRC$_4$} | 3 | {REL$_1$, REL$_2$, REL$_3$, REL$_4$, REL$_5$, REL$_6$, REL$_7$} | 7 | 4 |
| {SRC$_1$, SRC$_3$, SRC$_4$} | 3 | {REL$_1$, REL$_2$, REL$_3$, REL$_4$, REL$_5$, REL$_6$, REL$_7$} | 7 | 4 |
| {SRC$_2$, SRC$_3$, SRC$_4$} | 3 | (REL$_2$, REL$_3$, REL$_4$, REL5, REL$_6$, REL$_7$} | 6 | 3 |
| {SRC$_1$, SRC$_2$, SRC$_3$, SRC$_4$} | 4 | {REL$_1$, REL$_2$, REL$_3$, REL$_4$, REL$_5$, REL$_6$, REL$_7$} | 7 | 3 |

Table 4: Connectivity between relay nodes and destination nodes for Figure 5

| Relay REL$_i$ | REL$_1$ | REL$_2$ | REL$_3$ | REL$_4$ | REL$_5$ | REL$_6$ | REL$_7$ | REL$_8$ | REL$_9$ | REL$_{10}$ |
|---|---|---|---|---|---|---|---|---|---|---|
| rr$_i$ | 2 | 2 | 2 | 3 | 3 | 3 | 3 | * | * | * |
| Connected to DST$_i$ with i= | 1 | 1 | 1 | 1 | 1 | 1 | 2 | 2 | 2 | 3 |
| | 2 | 2 | 2 | 2 | 3 | 3 | 3 | 3 | | |
| | 3 | 3 | 3 | 3 | | | | | | |
| rd_cnt$_i$ | 1 | 3 | 3 | 3 | 3 | 2 | 2 | * | * | * |
| rd_min$_i$ | 5 | 7 | 7 | 7 | 7 | 5 | 6 | * | * | * |

Figure 6 shows the same network as Figures 4 and 5, but in a later stage of executing the algorithm described with regards to Figures 3a and 3b. More precisely, it shows the situation when both the "preparation steps" 300 to 307 of said algorithm and the first two iterations of the algorithm's main loop (constituted of steps 308 to 325) are already carried out. The third iteration yields test 308 to give a negative result since K=4, M=2 and N=6. Hence the algorithm terminates. Even if steps 309 to 318 (determination of N$_d$, rd_min$_i$ and rd_cnt$_i$) of the third iteration of said loop are not longer carried out, we still give their results in Table 6 below for sake of illustration. As already stated above, the relay nodes REL$_6$, REL$_8$ and REL$_9$ have been flagged as inactive during said first two iterations. The error-correcting code - a (6, 4)-Reed-Solomon code - and the transmitted packets are shown here after determining, distributing and using the network coding coefficients (a$_{ij}$) according to Figures 11a, 11b, 12a, 12b, 13a and 13b. The error correction code has in total been shortened by three while keeping its redundancy of two. This results in an improvement for destination node 422. Even if it receives the packets r$_2$, r$_3$, r$_4$, r$_5$, r$_7$, it has to apply only one predetermined erasure (corresponding to packet r$_1$), thus it can now not only recover the original source packets S$_1$, S$_2$, S$_3$ and S$_4$, but it can even correct one supplementary erasure or detect (although not correct) one error. For the destination nodes 421 and 423, the number of predetermined erasures (and hence the effective error correction capabilities) have not changed through the code shortening, as compared to Figure 5. To summarise, an improvement of the error correction capability has been obtained for both destinations 421 and 422, while the situation for destination 423 has not worsened.

Table 5 below shows the updated connectivity between the four source nodes and the remaining six active relay nodes, together with the cardinalities of the sets So and $R(S_0)$ as well as $n(S_0)$ as determined by steps 207 and 208 of the algorithm described with regards to Figure 2.

The Table 6 below illustrates the connectivity between the six active relay nodes and the destination nodes, the relay connectivity numbers rr$_i$ determined by the algorithm described with regards to Figure 2 (using the values $n(S_0)$ as shown in Table 5) and the values rd_min$_i$ and rd_cnt$_i$ as determined in the third iteration (not actually performed) of steps 315 and 316. M = 2 is the smallest one of the values rr$_1$, rr$_2$, ..., rr$_5$, rr$_7$.

Table 5: Source node subsets and their connectivity to relay nodes for Figure 6

| $S_0$ | card($S_0$) | $R(S_0)$ | card($R(S_0)$) | $n(S_0)$ |
|---|---|---|---|---|
| {SRC$_1$} | 1 | {REL$_1$, REL$_2$, REL$_3$} | 3 | 2 |
| {SRC$_2$} | 1 | {REL$_2$, REL$_3$, REL$_4$, REL$_5$} | 4 | 3 |
| {SRC$_3$} | 1 | {REL$_3$, REL$_4$, REL$_5$, REL$_7$} | 4 | 3 |
| {SRC$_4$} | 1 | {REL$_4$, REL$_5$, REL$_7$} | 3 | 2 |
| {SRC$_1$, SRC$_2$} | 2 | {REL$_1$, REL$_2$, REL$_3$, REL$_4$, REL$_5$} | 5 | 3 |

(continued)

| $S_0$ | card($S_0$) | $R(S_0)$ | card($R(S_0)$) | $n(S_0)$ |
|---|---|---|---|---|
| {$SRC_1$, $SRC_3$} | 2 | {$REL_1$, $REL_2$, $REL_3$, $REL_4$, $REL_5$, $REL_7$} | 6 | 4 |
| {$SRC_1$, $SRC_4$} | 2 | {$REL_1$, $REL_2$, $REL_3$, $REL_4$, $REL_5$, $REL_7$} | 6 | 4 |
| {$SRC_2$, $SRC_3$} | 2 | {$REL_2$, $REL_3$, $REL_4$, REL5, $REL_7$} | 5 | 3 |
| {$SRC_2$, $SRC_4$} | 2 | {$REL_2$, $REL_3$, $REL_4$, $REL_5$, $REL_7$} | 5 | 3 |
| {$SRC_3$, $SRC_4$} | 2 | {$REL_3$, $REL_4$, $REL_5$, $REL_6$, $REL_7$} | 5 | 3 |
| {$SRC_1$, $SRC_2$, $SRC_3$} | 3 | {$REL_1$, $REL_2$, $REL_3$, $REL_4$, $REL_5$, $REL_7$} | 6 | 3 |
| {$SRC_1$, $SRC_2$, $SRC_4$} | 3 | {$REL_1$, $REL_2$, $REL_3$, REL4, $REL_5$, $REL_7$} | 6 | 3 |
| {$SRC_1$, $SRC_3$, $SRC_4$} | 3 | {$REL_1$, $REL_2$, $REL_3$, $REL_4$, $REL_5$, $REL_7$} | 6 | 3 |
| {$SRC_2$, $SRC_3$, $SRC_4$} | 3 | {$REL_2$, $REL_3$, $REL_4$, $REL_5$, $REL_7$} | 5 | 2 |
| {$SRC_1$, $SRC_2$, $SRC_3$, $SRC_4$} | 4 | {$REL_1$, $REL_2$, $REL_3$, $REL_4$, $REL_5$, $REL_7$} | 6 | 2 |

Table 6: Connectivity between relay nodes and destination nodes for Figure 6.

| Relay $REL_i$ | $REL_1$ | $REL_2$ | $REL_3$ | $REL_4$ | $REL_5$ | $REL_6$ | $REL_7$ | $REL_8$ | $REL_9$ | $REL_{10}$ |
|---|---|---|---|---|---|---|---|---|---|---|
| $rr_i$ | 2 | 2 | 2 | 3 | 3 | * | 3 | * | * | * |
| Connected to $DST_i$ with i= | 1 | 1 | 1 | 1 | 1 | 1 | 2 | 2 | 2 | 3 |
| | 2 | 2 | 2 | 2 | 3 | 3 | 3 | 3 | | |
| | 3 | 3 | 3 | 3 | | | | | | |
| $rd\_cnt_i$ | 1 | 3 | 3 | 3 | 3 | * | 2 | * | * | * |
| $rd\_min_i$ | 5 | 5 | 5 | 5 | 5 | * | 5 | * | * | * |
| * means "not determined" | | | | | | | | | | |

To summarise, it can be said that the deciding criterion for eliminating redundant relay nodes is $rd\_min_i$. Hence the minimal error correction capability of the destination nodes has been increased.

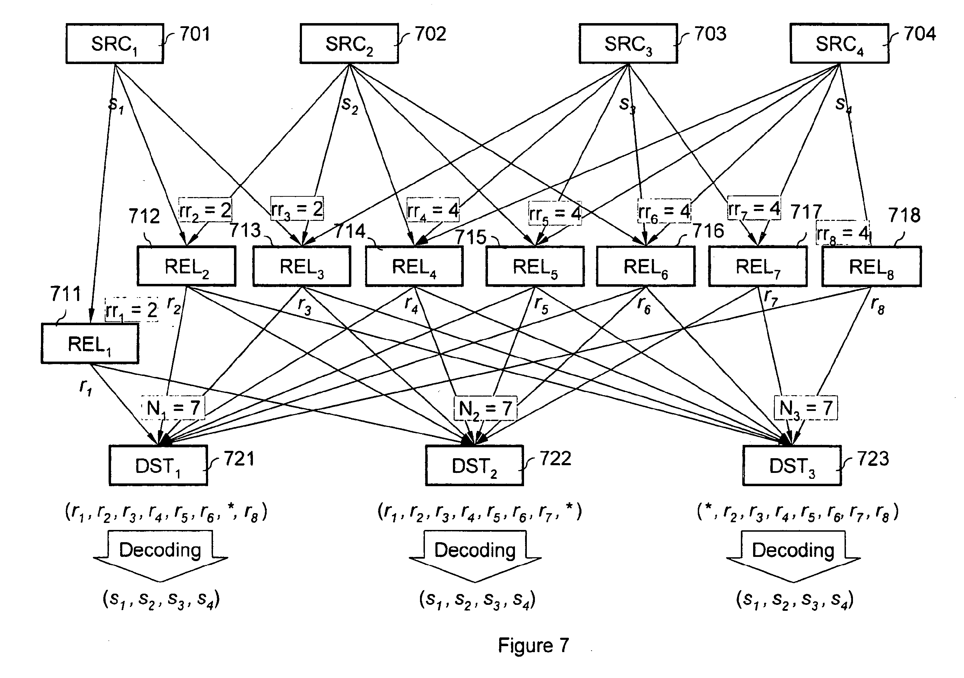

Figure 7 represents another example of a meshed wireless or wired network applying linear network coding, similarly to the networks presented with regards to Figures 1 and 4. It is a different case of redundant relay nodes to illustrate the result of the algorithms presented with regards to Figures 2 and 3. Figure 7 shows the situation when the "preparation steps" 300 to 307 are already carried out, as well as steps 308 to 318 (determination of $N_d$, $rd\_min_i$ and $rd\_cnt_i$) of the first iteration of the algorithm's main loop (constituted of steps 308 to 325). The error-correcting code - a (8, 6)-Reed-Solomon code - and the transmitted packets are shown here for sake of illustration only, in the hypothetical case where said algorithm would prematurely bail out from said loop at said point, before determining, distributing and using the network coding coefficients ($\alpha_{ij}$) according to Figures 11a, 11b, 12a, 12b, 13a and 13b. In detail, Figure 7 shows four source nodes 701 to 704, also called, respectively, $SRC_1$ to $SRC_4$. Each source node emits one data packet, respectively called $S_1$ to $S_4$, to each relay node connected to it.

Figure 7 also shows eight relay nodes 711 to 718, also called, respectively, $REL_1$ to $REL_8$. Each relay node emits one data packet, respectively called $r_1$ to $r_8$, determined from the received packets $S_1$ to $S_4$ by the network coding procedure, i.e., by calculating linear combinations using network coding coefficients ($\alpha_{ij}$) where $\alpha_{ij} = 0$ whenever a connection from source node $SRC_j$ to relay node $REL_i$ does not exist. Each relay node $REL_i$, after reception of each of the source packets issued by the source nodes connected to it, 4 calculates the linear combination $r_i = \sum_{j=1}^{4} \alpha_{ij} s_j$ to determine the data packet $r_i$ to be sent to destinations nodes. The connectivity between the source nodes 701 to 704 (and more generally, between the non-empty sub-sets So of the set of source nodes S, as they are enumerated by steps 205 and 206 of the algorithm described with regards to Figure 2) and the relay nodes 711 to 718 is detailed in Table 7 below. This table 7 also shows the cardinalities of the sets So and $R(S_0)$ as well as $n(S_0)$ as determined by steps 207 and 208. The connectivity between the source nodes and the relay nodes obviously determines which relay node receives which of the source data packets $S_1$ to $S_4$. A more detailed implementation example for the operation of relay nodes is described with regards to Figures 12a and 12b.

Figure 7 also shows three destination nodes 721, 722 and 723, also respectively called $DST_1$, $DST_2$ and $DST_3$. The destination node 721 is connected to the $N_1$=7 relay nodes 711, 712, 713, 714, 715, 716, 718 and receives the (possibly erroneous) data packets $r_1$, $r_2$, $r_3$, $r_4$, $r_5$, $r_6$ and $r_8$. The destination node 722 is connected to the $N_2$=7 relay

nodes 711, 712, 713, 714, 715, 716, 717 and receives the (possibly erroneous) data packets $r_1$, $r_2$, $r_3$, $r_4$, $r_5$, $r_6$ and $r_7$. The destination node 723 is connected to the $N_3=7$ active relay nodes 712, 713, 714, 715, 716, 717, 718 and receives the (possibly erroneous) data packets $r_2$, $r_3$, $r_4$, $r_5$, $r_6$, $r_7$ and $r_8$ $N_1$, $N_2$ and $N_3$ are determined during steps 310 to 313. The packets $r_i = (p_{i1}, p_{i2}, ..., p_{iL})$ for i = 1,...,8 can bee seen as vectors of the linear space $GF(q)^L$. As explained more in detail with regards to Figures 11 a and 11 b, thanks to the choice of the network coding coefficients $\alpha_{ij}$, each of the symbol strings of the form $(p_{1h}, p_{2h}, p_{3h}, p_{4h}, p_{5h}, p_{6h}, p_{7h}, p_{8h})$ for h = 1, 2, ..., L obtained from said data packets forms a code word of a 6-dimensional linear error correcting code, as for example a (8, 6)-Reed-Solomon code. Destination nodes 721, 722 and 723 correctly recover the original source packets $s_1$ to $s_4$ from the received packets $(r_1, r_2, r_3, r_4, r_5, r_6, r_8)$, $(r_1, r_2, r_3, r_4, r_5, r_6, r_7)$ and $(r_2, r_3, r_4, r_5, r_6, r_7, r_8)$ respectively (considering the symbols of the missing packet $r_7$, $r_8$ and $r_1$, respectively, as erasures, marked by an '*' in Figure 7) with the capability of correcting one supplementary erasure or of detecting (although not correcting) one error, since the remaining error correction capability with one predetermined erasure equals one. The operation of the destination nodes 721, 722 and 723 is described more in detail with regards to Figures 13a and 13b.

Table 7: Source node subsets and their connectivity to relay nodes for Figure 7

| $S_0$ | card($S_0$) | R($S_0$) | card(R($S_0$)) | n($S_0$) |
|---|---|---|---|---|
| {$SRC_1$} | 1 | {$REL_1$, $REL_2$, $REL_3$} | 3 | 2 |
| {$SRC_2$} | 1 | {$REL_2$, $REL_3$, $REL_4$, $REL_5$, $REL_6$} | 5 | 4 |
| {$SRC_3$} | 1 | {$REL_3$, $REL_4$, $REL_5$, $REL_6$, $REL_7$} | 5 | 4 |
| {$SRC_4$} | 1 | {$REL_4$, $REL_5$, $REL_6$, $REL_7$, $REL_8$} | 5 | 4 |
| {$SRC_1$, $SRC_2$} | 2 | {$REL_1$, $REL_2$, $REL_3$, $REL_4$, $REL_5$, $REL_6$} | 6 | 4 |
| {$SRC_1$, $SRC_3$} | 2 | {$REL_1$, $REL_2$, $REL_3$, $REL_4$, $REL_5$, $REL_6$, REL7} | 7 | 5 |
| {$SRC_1$, $SRC_4$} | 2 | {$REL_1$, $REL_2$, $REL_3$, $REL_4$, $REL_5$, $REL_6$, $REL_7$, $REL_8$} | 8 | 6 |
| {$SRC_2$, $SRC_3$} | 2 | {$REL_2$, $REL_3$, $REL_4$, $REL_5$, $REL_6$, $REL_7$} | 6 | 4 |
| {$SRC_2$, $SRC_4$} | 2 | {$REL_2$, $REL_3$, $REL_4$, $REL_5$, $REL_6$, $REL_7$, $REL_8$} | 7 | 5 |
| {$SRC_3$, $SRC_4$} | 2 | {$REL_3$, $REL_4$, $REL_5$, $REL_6$, $REL_7$, $REL_8$} | 6 | 4 |
| {$SRC_1$, $SRC_2$, $SRC_3$} | 3 | {$REL_1$, $REL_2$, $REL_3$, $REL_4$, $REL_5$, $REL_6$, $REL_7$} | 7 | 4 |
| {$SRC_1$, $SRC_2$, $SRC_4$} | 3 | {$REL_1$, $REL_2$, $REL_3$, $REL_4$, $REL_5$, $REL_6$, $REL_7$, $REL_8$} | 8 | 5 |
| {$SRC_1$, $SRC_3$, $SRC_4$} | 3 | {$REL_1$, $REL_2$, $REL_3$, $REL_4$, $REL_5$, $REL_6$, $REL_7$, $REL_8$} | 8 | 5 |
| {$SRC_2$, $SRC_3$, $SRC_4$} | 3 | {$REL_2$, $REL_3$, $REL_4$, $REL_5$, $REL_6$, $REL_7$, $REL_8$} | 7 | 4 |
| {$SRC_1$, $SRC_2$, $SRC_3$, $SRC_4$} | 4 | {$REL_1$, $REL_2$, $REL_3$, $REL_4$, $REL_5$, $REL_6$, $REL_7$, $REL_8$} | 8 | 4 |

Table 8 below illustrates the connectivity between the relay nodes and the destination nodes, the relay connectivity numbers $rr_i$ determined by the algorithm described with regards to Figure 2 (using the values n($S_0$) as shown in Table 6) and the values $rd\_min_i$ and $rd\_cnt_i$ as determined in the first iteration of steps 315 and 316. M=2 is the smallest one of the values $rr_i$, $rr_2$, ..., $rr_9$. Sorting the relay nodes $REL_1$ to $REL_8$ according to step 319 yields to the order [$REL_8$, $REL_7$, $REL_6$, $REL_5$, $REL_4$, $REL_1$, $REL_3$, $REL_2$]. Note that the orders between $REL_7$ and $REL_8$, between $REL_4$, $REL_5$ and $REL_6$ and between $REL_3$ and $REL_2$ are arbitrary ones. The loop composed of steps 320 to 323 yields in flagging the first two relays on this sorted list, $REL_8$ and $REL_7$, as inactive. For the third relay, $REL_6$, the condition of step 321 is not longer fulfilled since $rr_7=4$, $M=_2$ and n=3.

Table 8: Connectivity between relay nodes and destination nodes for Figure 7

| Relay $REL_i$ | $REL_1$ | $REL_2$ | $REL_3$ | $REL_4$ | $REL_5$ | $REL_6$ | $REL_7$ | $REL_8$ |
|---|---|---|---|---|---|---|---|---|
| $rr_i$ | 2 | 2 | 2 | 4 | 4 | 4 | 4 | 4 |
| Connected to $DST_i$ with i= | 1 | 1 | 1 | 1 | 1 | 1 | 2 | 3 |
| | 2 | 2 | 2 | 2 | 2 | 2 | 3 | |
| | | 3 | 3 | 3 | 3 | 3 | | |

(continued)

| Relay REL_i | REL_1 | REL_2 | REL_3 | REL_4 | REL_5 | REL_6 | REL_7 | REL_8 |
|---|---|---|---|---|---|---|---|---|
| rd_cnt_i | 2 | 3 | 3 | 3 | 3 | 3 | 2 | 2 |
| rd_min_i | 7 | 8 | 8 | 8 | 8 | 8 | 7 | 7 |

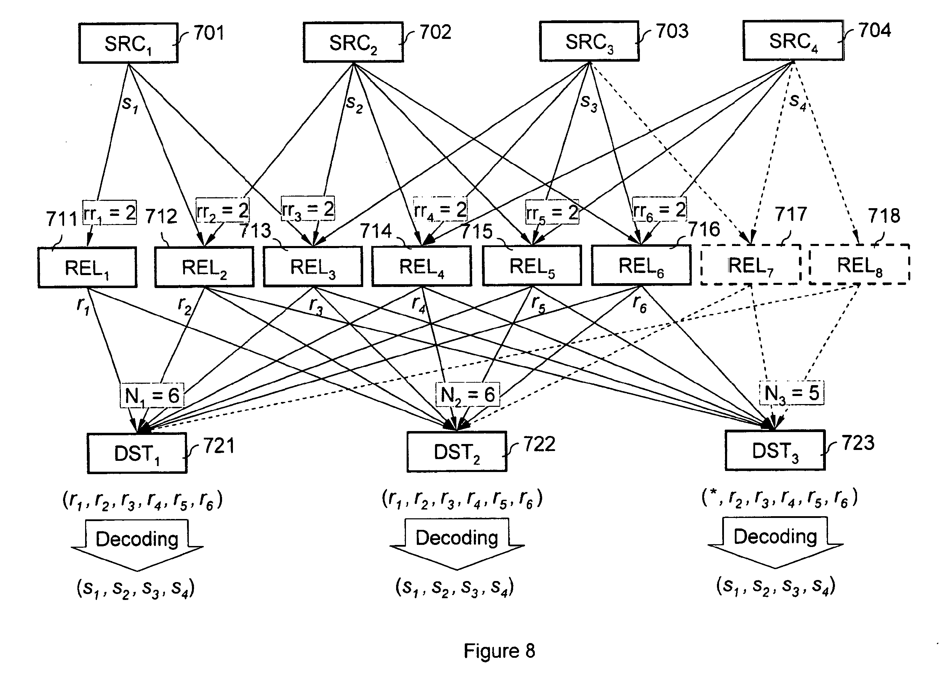

Figure 8 shows the same network as Figure 7, but in a later stage of executing the algorithm described with regards to Figures 3a and 3b. More precisely, Figure 8 shows the situation when both the "preparation steps" 300 to 307 of said algorithm and the first iteration of the algorithm's main loop (constituted of steps 308 to 325) are already carried out. The second iteration yields the test 308 to give a negative result since K=4, M=2 and N=6. Hence the algorithm terminates. Even if the steps 309 to 318 (determination of $N_d$, $rd\_min_i$ and $rd\_cnt_i$) of the second iteration of said loop are not longer carried out, we still give their results in Table 10 below for sake of illustration. As already stated above, relay nodes $REL_7$ and $REL_8$ have been flagged as inactive during the first iteration. The error-correcting code - a (6, 4)-Reed-Solomon code - and the transmitted packets are shown here after determining, distributing and using the network coding coefficients $(\alpha_{ij})$ according to Figures 11a, 11b, 12a, 12b, 13a and 13b. The error correction code has, in total, been shortened by two while keeping its redundancy of two. This results in an improvement both for the destination node 721 and 722. They receive the packets $r_1$, $r_2$, $r_3$, $r_4$, $r_5$, $r_6$, and do not have to apply any predetermined erasure. Thus, they can now recover the original source packets $s_1$ to $s_4$ while correcting two supplementary erasures or one error. For the destination node 723, the number of predetermined erasures (and hence the error correction capabilities) is not changed by the code shortening, as compared to Figure 7. To summarise, an improvement of the error correction capability has been obtained for both destinations 721 and 722, while the situation for destination 723 has not worsened.

Table 9 below shows the updated connectivity between the four source nodes and the remaining six active relay nodes, together with the cardinalities of the sets So and $R(S_0)$, as well as $n(S_0)$ as determined by steps 207 and 208.

The Table 10 below illustrates the connectivity between the six active relay nodes and the destination nodes, the relay connectivity numbers $rr_i$ determined by the algorithm described with regards to Figure 2 (using the values $n(S_0)$ as shown in Table 9) and the values $rd\_min_i$ and $rd\_cnt_i$ as determined in the second iteration (not actually performed) of steps 315 and 316. M = 2 is the smallest one of the values $rr_i$, $rr_2$, ..., $rr_6$.

Table 9: Source node subsets and their connectivity to relay nodes for Figure 8

| $S_0$ | card($S_0$) | $R(S_0)$ | card($R(S_0)$) | $n(S_0)$ |
|---|---|---|---|---|
| {SRC_1} | 1 | {REL_1, REL_2, REL_3} | 3 | 2 |
| {SRC_2} | 1 | {REL_2, REL_3, REL_4, REL_5, REL_6} | 5 | 4 |
| {SRC_3} | 1 | {REL_3, REL_4, REL_5, REL_6} | 4 | 3 |
| {SRC_4} | 1 | {REL_4, REL_5, REL_6} | 3 | 2 |
| {SRC_1, SRC_2} | 2 | {REL_1, REL_2, REL_3, REL_4, REL_5, REL_6} | 6 | 4 |
| {SRC_1, SRC_3} | 2 | {REL_1, REL_2, REL_3, REL_4, REL_5, REL_6} | 6 | 4 |
| {SRC_1, SRC_4} | 2 | {REL_1, REL_2, REL_3, REL_4, REL_5, REL_6} | 6 | 4 |
| {SRC_2, SRC_3} | 2 | {REL_2, REL_3, REL_4, REL_5, REL_6} | 5 | 3 |
| {SRC_2, SRC_4} | 2 | {REL_2, REL_3, REL_4, REL_5, REL_6} | 5 | 3 |
| {SRC_3, SRC_4} | 2 | {REL_3, REL_4, REL_5, REL_6} | 4 | 2 |
| {SRC_1, SRC_2, SRC_3} | 3 | {REL_1, REL_2, REL_3, REL_4, REL_5, REL_6} | 6 | 3 |
| {SRC_1, SRC_2, SRC_4} | 3 | {REL_1, REL_2, REL_3, REL_4, REL_5, REL_6} | 6 | 3 |
| {SRC_1, SRC_3, SRC_4} | 3 | {REL_1, REL_2, REL_3, REL_4, REL_5, REL_6} | 6 | 3 |
| {SRC_2, SRC_3, SRC_4} | 3 | {REL_2, REL_3, REL_4, REL_5, REL_6} | 5 | 2 |
| {SRC_1, SRC_2, SRC_3, SRC_4} | 4 | {REL_1, REL_2, REL_3, REL_4, REL_5, REL_6} | 6 | 2 |

Table 10: Connectivity between relay nodes and destination nodes for Figure 8.

| Relay REL_i | REL_1 | REL_2 | REL_3 | REL_4 | REL_5 | REL_6 | REL_7 | REL_8 |
|---|---|---|---|---|---|---|---|---|
| rr_i | 2 | 2 | 2 | 2 | 2 | 2 | * | * |
| Connected to DST_1 with i= | 1 | 1 | 1 | 1 | 1 | 1 | 2 | 2 |
| | 2 | 2 | 2 | 2 | 3 | 3 | 3 | 3 |
| | 3 | 3 | 3 | 3 | | | | |
| rd_cnt_i | 2 | 3 | 3 | 3 | 3 | 3 | * | * |

(continued)

| Relay $REL_i$ | $REL_1$ | $REL_2$ | $REL_3$ | $REL_4$ | $REL_5$ | $REL_6$ | $REL_7$ | $REL_8$ |
|---|---|---|---|---|---|---|---|---|
| $rd\_min_i$ | 5 | 6 | 6 | 6 | 6 | 6 | * | * |

To summarise, the deciding criterion for eliminating redundant relay nodes is $rd\_cnt_i$. Hence, the number of destination nodes which see an increase of their error correction capability has been maximised.

While the present invention applies both to wired and wireless networks, a preferred embodiment is a wireless network wherein all participating nodes share the common medium by the way of TDMA ("Time Division Multiple Access"). However, this description is not meant to be limitative and the invention could also be applied in the case of a wireless network sharing the medium for example by the way of FDMA ("Frequency Division Multiple Access") or CDMA ("Code Division Multiple Access"), or in the case of a wired network where the medium does not need to be shared (since all nodes transmit their data using separate wires), or even in the case of a hybrid (both wired and wireless) network.

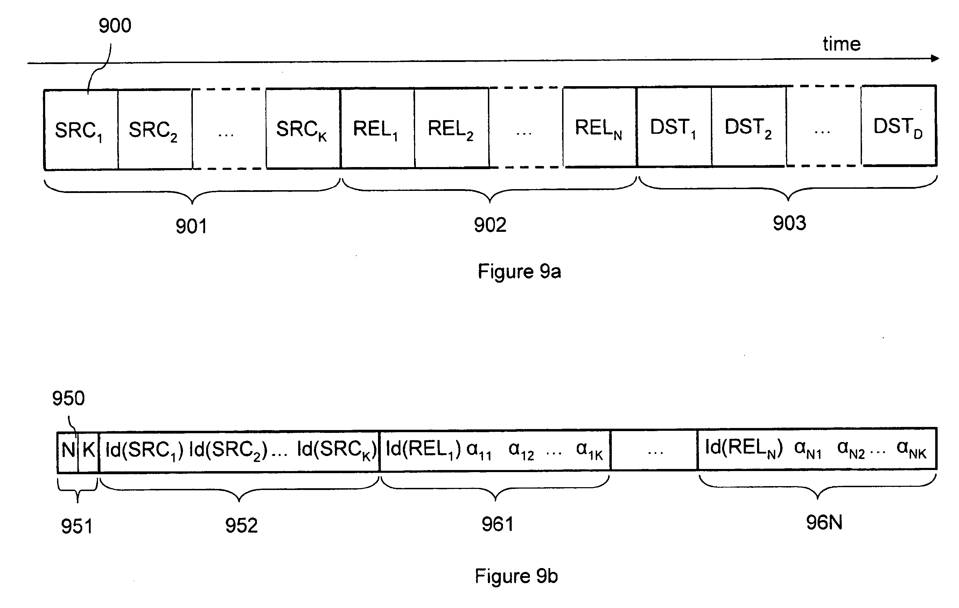

Time division multiple access (TDMA) is a channel access method for shared medium networks wherein several network nodes share the same frequency channel by dividing the signal into different time slots. Figure 9a shows a transmission sequence 900 composed of N+K+D time slots of equal, predetermined duration; such a sequence is also referred to as "Super-Frame". Here K is the number of source nodes (K = 4 in the examples presented in Figure 6 and 8), N is the number of active relay nodes (N = 6 in said examples) and D is the number of destination nodes (D = 3 in said examples). The sequence 900 is divided into:

- a sub-sequence 901, sub-divided into K time slots, each time slot allotted to exactly one source node;
- a sub-sequence 902, sub-divided into N time slots, each time slot allotted to exactly one active relay node (in an alternative implementation, a timeslot is allotted to all, i.e., both active and inactive, $N_{init}$ relay nodes so that even inactive relay nodes can continue to transmit control packets);
- a sub-sequence 903, sub-divided into D time slots, each time slot allotted to exactly one destination node and allowing the latter to transmit control packets.

After the end of a super-frame, a new one starts. The predetermined duration of a time slot and the numbers K, N and D are supposed to be known to all network nodes. Furthermore each network node is capable of detecting the start of a new super-frame, the start of a new time slot dedicated to any other network node that is connected to itself and the start of the timeslot allotted to itself for emission.

It can be seen that each relay node can receive the source data packets from the respective connected source nodes during subsequence 901 of a given super-frame 900, perform network coding and transmit its encoded packet during its allotted time slot within the sub-sequence 902 of the same super-frame. The destination nodes receive, store and treat all encoded packets that they can receive of a given super-frame to recover the source packets sent during the same super-frame. Synchronization is easily achieved and mixing encoded data frames belonging to different super-frames (which would be catastrophic for recovering the original source data) can easily be avoided.

As already stated in the description of Figure 1, it is assumed that all data packets that are subject to network coding have a payload of fixed predetermined length L and a header that might not be subject to network coding. Additionally, all nodes are capable of emitting and receiving control packets conveying different kinds of network management information rather than payload data. Such control packets, that can be easily distinguished from data packets (for example by having a different header), are not subject to network coding and may have a different length than data packets (typically a considerably shorter one). A control packet may be emitted in the same time slot as a data packet (preceding or succeeding it), or instead of a data packet. Control packets typically occupy only a very small part of the total bandwidth available in the network; consequently classical schemes of coping with errors or loss, as acknowledgements and retransmission, or flooding can be employed without impacting the (possibly high-bandwidth) payload data transmission. In a particular implementation of the present invention, the timeslots allotted to nodes that are known to only emit control packets (as destination nodes and possibly inactive relay nodes) are significantly shorter than the timeslots allotted to nodes transmitting data packets of length L.

Figure 9b shows an example of a control packet 950 indicating network coding coefficients determined as described above, by a centralized network node. In a preferred embodiment, a destination node chosen during a network initialisation phase performs this determination, described in more details with regards to Figures 13a and 13b, during an initialisation phase and possibly also later, whenever a change in the network topology (adding or removing a node or a link) is detected. Such a packet, after having been provided by said centralized node, is then propagated in the whole network through some suitable broadcasting method, as spanning tree broadcasting or flooding, as to reach all network nodes, enabling them to take into account the new coefficients in a synchronized manner at the start of a new super-frame. The packet 950 comprises:

- a field 951 indicating the number of active relay nodes N and the number of source nodes K;
- a field 952 indicating the unique identifiers of the K source nodes $SRC_1$, ..., $SRC_K$;
- N fields 961, 962, ... , 96N; the field 96i for i = 1, 2, ... , N being composed of the unique identifier of the active relay node $REL_i$, followed by the list of K network coding coefficients $\alpha_{i1}$, $\alpha_{i2}$, ..., $\alpha_{ik}$ extracted from the $i^{th}$ row of the network coding matrix. No field exists in packet 950 for inactive relay nodes.

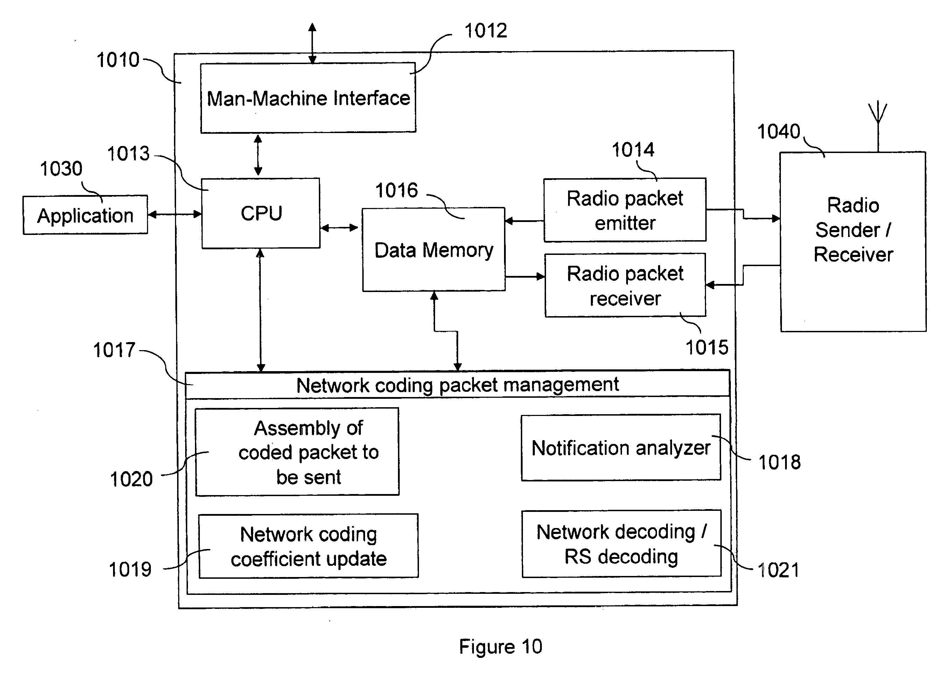

Figure 10 shows the hardware and software architecture for the communication module of a network node suitable for taking the role of a source node 101, 102, 103 and 104, of a relay node 111, 112, 113, 114, 115 and 116 or of a destination node 121 and 122, in a preferred embodiment. Said communication module, executing the different algorithms shown in the Figures, corresponds to block 1010, while blocks 1030 and 1040 correspond to its environment.

A man-machine interface 1012 may, for example, display information on the network connectivity or relay activity/inactivity to a user. A CPU ("Central Processing Unit") 1013 executes the program code implementing the algorithms shown in the Figures. A radio packet emitter 1014 reads data and control packets stored in the data memory 1016 to transmit them over a radio sender / receiver unit 1040. A radio packet receiver 1015 stores data and control packets received by the unit 1040 into the memory 1016. The radio packet receiver 1015 is also able to detect and signal at least some cases of erroneous reception by analysing the Received Signal Strength Indication (RSSI), the Signal-to-Noise Ratio (SNR) or through checking a cyclic redundancy check (CRC). The data memory 1016 is a Random Access Memory (RAM) serving as working memory for CPU 1013. The data memory 1016 stores, among others, the data and control packets received or to be sent and the network coding coefficients, as calculated when the unit 1010 acts as a destination node executing the algorithms presented with regards to Figures 11a, 11b 13a and 13b, or received when it acts as a relay node executing the algorithms presented with regards to Figures 12a and 12b.

A network coding packet management 1017 may be implemented by software executed on CPU 1013, by dedicated hardware (allowing performance gains through discharging the CPU 1013) or a combination of both. It comprises the sub-modules 1018, 1019, 1020 and 1021. The notification analyser 1018 allows distinguishing between received data and control packets. Furthermore, the notification analyser parses the control packets and carries out the appropriate processes in response, as for example the algorithm described with regards to Figure 12a for a relay node. A network coding coefficient update manager 1019 allows managing the update of the network coding coefficients to be used by the relay node, as described with regards to Figures 12a and 12b, or by the destination node, as described with regards to Figures 13a and 13b. An assembly module of codes packets 1020 is used by the relay node to generate the packet to be sent, according to the algorithm described with regards to Figure 12b. The decoding module 1021 carries out Reed-Solomon and network decoding in the destination node, as described with regards to Figure 13b. The original source data recovered by this module is then forwarded to the application 1030 for further processing. In a source node, the data packets to be sent originate from the application 1030.

Figure 11 a shows the algorithm for determining the coefficients of the network coding matrix ($\alpha_{ij}$), carried out by a centralized node of a meshed network. The goal of this algorithm is to find a generator matrix for an (N, K)-Reed-Solomon code (i.e., an N-by-K matrix of rank K wherein each of the K columns is a code word of said code) with the constraint that zeros must be positioned in places corresponding to links that do not exist between a source node and a relay node. In a preferred embodiment, said centralized node is one of the destination nodes, selected during the network initialisation phase.

Step 1100 of the algorithm is triggered by the algorithm described in Figure 13a, described below, in particular a step 1304. During a step 1101, the number K of source nodes is determined. During a step 1102, the number N of active relay nodes is determined. During a step 1103, the information on the network topology, i.e. the links present in the network between the source nodes and the active relay nodes, as determined by the algorithm described on Figure 2 is gathered.

Protocols allowing the exchange of information about the network nodes unique identifiers and the connectivity are well known and are not described here. Note that, in the case of a wireless network, it is assumed that a link exists between two nodes when radio communication between them can take place in a sufficiently reliable manner, for example when the RSSI or the SNR reach a certain, predetermined threshold.

During a step 1104, the network topology is analyzed in order to find out if the connectivity in the network is sufficient to implement a network coding scheme as described with regards to Figures 1 to 10. An (N, K)-Reed-Solomon code has a minimum Hamming weight of N-K+1. In other words, no code word except the all-zero word has more than K-1 zeros. In the context of the described network (remember that each of the N rows of the network coding matrix ($\alpha_{ij}$) corresponds to an active relay node while each of the K columns corresponds to a source node), this means that each source node must be connected to at least N-K+1 relay nodes. Otherwise, the only code word having zeros at positions corresponding to absent links would be the all-zero word, hence the matrix would never have rank K. This condition, concerning each single source node, is generalized to all non-empty subsets of the set of source nodes as follows.

Consider a non-empty subset So of the set S of all source nodes, with the cardinality $K_0$ where $0 \leq K_0 \leq K$ (K being the cardinality of S). Let $R_0$ be the set of relay nodes that are connected to at least one of the source nodes in the set So. Let No be the cardinality of $R_0$, $N_0 \leq N$. The set of (N, K)-Reed-Solomon code words from which the $K_0$ code words corresponding to the source nodes from So can be chosen is a linear subspace of dimension $K-(N-N_0)$. It has to be noted that the totality of the code words forms a linear subspace of dimension K and all the chosen code words must have zeros on the $N-N_0$ positions corresponding to the relay nodes that are not in $R_0$. On the other hand, the dimension of said subspace must be at least $K_0$. Otherwise, there would not be $K_0$ linearly independent vectors, and hence the desired network coding matrix with K linearly independent columns would not exist. To resume, we need $K-(N-N_0) \geq K_0$ or $N_0-K_0 \geq N-K$. This inequality shall be fulfilled for any non-empty subset So of the set of nodes S.

During step 1104, the difference $N_0-K_0$ is calculated for each such subset So (i.e., the cardinality of the set of relay nodes connected at least one of the source nodes from So minus the cardinality of So). During step 1104, the minimum M of these differences is determined. For sake of optimisation, the value of M previously determined by the algorithm presented in Figure 2, called from the algorithm presented in Figures 3a and 3b, could also be reused. Note that $M \leq N-K$ because the whole set $S_0=S$ of source nodes is also taken into account for determining M. If M = N-K, the result of step 1104 is positive and a step 1106 is proceeded to. Otherwise, during a step 1105, the network is virtually augmented, for the purpose of calculations only, by adding N-K-M (K being the initial number of source nodes) imaginary source nodes. Each imaginary source node is considered to be connected to all N active relay nodes. The network augmented in this way necessarily passes the test of step 1104 carried out after replacing K by the adjusted value of $K_{adj} = K+N-K-M = N-M$. Hence step 1106 can be directly proceeded to, except that during the later steps, the calculation of the network coding coefficients for the matrix columns corresponding to said imaginary source nodes can be omitted, since relay nodes never have to process data originating from said imaginary source nodes and consequently do not need network coding coefficients corresponding to them. Note that the network coding of the preferred embodiment, as shown in the Figures, is applicable as long as $N>K_{adj}$.

The limit case, when $N=K_{adj}$, corresponds to the case in which no error or erasure correction can be carried out any more but all original source packets can still be recovered by the destination node as long as no transmission errors occur. In case of $N<K_{adj}$, even this becomes impossible, in which case the algorithm terminates with a failure notice (not illustrated). Increasing the dimension from K to $K_{adj}$ while retaining the code block length N of a Reed-Solomon code decreases its redundancy and hence its error correction power (remember one can correct E errors and F erasures in a code word as long as $2*E+F \leq N-K_{adj}$), but allows to retain the advantages of the present invention in many cases where the connectivity between source nodes and relay nodes is too limited to reach the full error correction power of an (N, K)-Reed-Solomon code.

During step 1106, a Galois Field GF(q) with sufficient size q for implementing the particular embodiment of the invention described with regards to Figures 1 to 10 is chosen. The maximal block length N of a non-extended (N, K)-Reed-Solomon code is equal to q-1. In a preferred embodiment, $q = 2^8= 256$ and the number of relay nodes N is less or equal to 255, a restriction which does not appear to be a practical hindrance in most cases that occur in the usual technical field of the present invention. If N is strictly less than q-1, the (N, K)-Reed-Solomon code used is a so-called "shortened code". In an alternative implementation, the number m of bits per symbol is chosen in such a manner that $N<2^m$ and the Galois Field $GF(2^m)$ is used.

During a step 1107, a matrix with N rows and K columns is created (each row corresponding to a relay node and each column corresponding to a source node), wherein the coefficients of said matrix are able to have the value of each of the q symbols of GF(q) as well as two special symbols different from the symbols from GF(q), respectively representing an "indeterminate" value and an "erasure" value. Initially, all coefficients of the matrix shall be set to the indeterminate value.

During a step 1108, the connectivity between all the source nodes and all the relay nodes is taken into consideration and the value "0" (zero) is positioned into the coefficient $\alpha_{ij}$ if and only if no connection exists between the source node $SRC_j$ and the relay node $REL_i$. The remaining coefficients, corresponding to existing connections, remain indeterminate.

During a step 1109 (shown in Figure 11b), the column index j is initialized to "1". Note that the matrix columns, corresponding to the source nodes, are numbered from 1 to K. During a step 1110, $Z_j$, the number of zeros in column j, is determined. Note that $Z_j \leq K-1$ after passing the test of step 1104 and possibly the adjustment of K of step 1105.

During a step 1111, among the coefficients in column j with an indeterminate value (i.e., not "0"), the coefficient with the lowest row index is set to "1" ("1" being the neutral element of GF(q) with regard to multiplication). Note that, for any suitable choice of the column vector, there always exists a multiple of said column vector having a "1" at the lowest non-0 position which is equally suitable. Hence the choice of step 1111 does not really restrict the space of possible solutions.

During a step 1112, among the coefficients in column j with an indeterminate value (i.e., neither "0" nor "1"), the $K-Z_j-1$ coefficients with the lowest row indices are set to randomly chosen symbols from GF(q). Any true or pseudo-random generator having sufficiently high periodicity is suitable during step 1112.

During a step 1113, the remaining N-K coefficients in column j with an indeterminate value are set to the "erasure" value. During a step 1114, an (N, K)-Reed-Solomon code word is generated in column j while taking into account the N-K erasures, using a well-known correction technique. The resulting code word is equal to the original word in the K positions that were not erasures (in particular, the zeros positioned in step 1108 are still present), while the said N-K erasures are replaced by symbols from GF(q). It is a well-known fact that exactly one such a code word exists.

During a step 1115, the column index j is incremented by one. During a step 1116, it is determined if j is less than or equal to K. If yes, step 1110 is proceeded to. Consequently, the steps 1110 to 1116 are repeated for j = 1 to K. Otherwise, i.e., as soon as all K columns of the matrix are filled with (N, K)-Reed-Solomon code words, step 1117 is proceeded to.

During step 1117, the rank of the matrix is determined. If the rank is less than K, the columns are linearly dependent and treatment goes back to step 1109, after resetting all non-0 coefficients to the indeterminate value. Consequently, steps 1109 to 1117 are repeated, but during step 1112, different random coefficients are chosen, resulting in a different matrix until said different matrix has rank K. Note that, without the network topology verification step 1104 and the adjustment step 1105, insufficient network connectivity would yield in an infinite loop here. In an alternative implementation of the present invention, the verification step 1104 at the beginning of the algorithm is skipped and the adjustment step 1105 is performed when the number of unsuccessful iterations resulting from test 1117 exceeds some predetermined threshold value. Binary search could be used to determine the highest possible code dimension K. Finding a matrix with rank K causes the process to proceed to step 1118.

During step 1118, the obtained matrix $(\alpha_{ij})$ is output for further processing as, for example, shown more in detail with regards to Figure 13a. Then the algorithm stops during a step 1119.

Figures 12a and 12b show two main algorithms performed by the relay node $REL_i$ (i = 1, 2, ..., $N_{init}$). Figure 12a shows the process for updating the network coding coefficients in a preferred embodiment. During a step 1201, reception of a control packet 950 originating from the centralized node carrying out the determination of the network coding coefficients $(\alpha_{ij})$, and containing said coefficients, is performed. During a step 1202, the relay node extracts the total number of active relay nodes N and the total number of source nodes K from field 951 of packet 950 and stores them.

During a step 1203, the list of all K source node unique identifiers is extracted from field 952 and stored. During a step 1204, field 96i is located by comparing the relay node unique identifiers $REL_1$, $REL_2$, ..., $REL_N$ contained at the beginning of fields 961, 962, ..., 96N with the own unique identifier of relay node $REL_i$. If the relay's unique identifier is found in any one of said fields, a step 1205 is proceeded to. Otherwise, a step 1207 is proceeded to. During step 1205, the K network coding coefficients relevant for the relay node $REL_i$, $\alpha_{i1}$, $\alpha_{i2}$, ..., $\alpha_{iK}$ are extracted from field 96i. During a step 1206, those coefficients are stored for later processing (see step 1258 as described below, with regards to Figure 12b). Note that, unless an error occurred, at this point $\alpha_{ij} \neq 0$ only if the source node $SRC_j$ is connected to the relay node $REL_i$.

During step 1207, the relay node enters the "inactive mode" where it does not perform network coding according to Figure 12b. In a particular embodiment, said inactive mode consists in a "low power" mode for the relay node in question. In any case (both after step 1206 or 1207), this algorithm stops during a step 1208.

Figure 12b shows the processing for data reception, encoding and retransmission in a preferred embodiment, carried out only by active relay nodes. Step 1250 signifies the detection of the start of a new super-frame. During a step 1251, the source node counter j is initialized to 1. During a step 1252, the start of the time slot allotted to source node $SRC_j$ within subsequence 901 of the super-frame 900 is awaited. During a step 1253, it is checked if source node $SRC_j$ is connected to relay node $REL_i$. If yes, step 1254 is proceeded to. Otherwise, step 1255 is proceeded to.

Step 1254 consists in receiving and storing the data packet $s_j$ of length L, provided by source node $SRC_j$. Whenever a reception error is detected during step 1254 as, for example, by analysing RSSI or SNR, or calculating a CRC, this reception error is memorized in a flag for the purpose of a step 1257 described below. Step 1255 consists in incrementing by one the source node counter j. During a step 1256, it is determined if the source node counter j is less than or equal to the total number of source nodes K. if yes, step 1252 is proceeded to. Consequently, steps 1252 to 1256 are repeated for j = 1, 2, ..., K. Otherwise, during step 1257, it is determined if a reception error was detected during any one of the preceding executions of step 1254 within the current super-frame 900.

If yes, step 1261 is proceeded to. Otherwise, during a step 1258, the linear combination of the received source packets $s_j$ (being vectors of length L over GF(q)), using the scalar coefficients $\alpha_{ij}$ as received and stored according to step 1206 described above, is calculated to obtain the encoded packet $r_i$, being also a vector of length L over GF(q).

Note that source packets $s_j$, that are not available for calculation to relay node $REL_i$ because their originating source nodes $SRC_j$ are not connected, are not needed since the corresponding coefficients $\alpha_{ij}$ are equal to 0. In an alternative embodiment, the value of $r_i$ is calculated in a cumulative manner during step 1254, after initializing the value vector $r_i$ with the null vector during step 1251. During a step 1259, that follows step 1258, the relay node $REL_i$ awaits the start of the time slot allotted to itself within subsequence 902 of the super-frame 900. During a step 1260, the relay node $REL_i$ transmits the encoded packet $r_i$. After that, the process stops during a step 1263, until the start of a new super-frame is detected.

A step 1261, carried out on detection of any reception error (see step 1257 above), is similar to step 1259 of awaiting the start of the time slot allotted to relay node $REL_i$, the only difference being that it is followed by a step 1262 of transmitting an error notification instead of the encoded data packet. In a particular embodiment, the relay node $REL_i$ simply remains silent during its allotted time slot, a condition appropriately detectable by the destination node. In another embodiment, the relay node $REL_i$ transmits during step 1262 a partial linear combination, taking into account only the source data packets for which no reception error was detected, together with an indication of the missing sources. The destination node could use such information, representing supplementary linear equations, to perform redundant data verifications after step 1360 (See Figure 13b), for increasing the confidence level of the decoded data. In any case, step 1263 is then proceeded to.

Figures 13a and 13b show two main algorithms executed by the destination nodes $DST_1$ to $DST_D$.

Figure 13a shows the processing for updating the network coding coefficients, in a preferred embodiment. This process is carried out only by one among the D destination nodes, chosen during the network initialisation phase. A step 1300 consists in detecting said choice by the destination node in question. This step can also be triggered again later, whenever a modification of the network topology (adding or removing a source, relay or destination node or a network connection) is detected. During a step 1301, the destination node receives, from each relay node $REL_i$ a dedicated control packet, comprising the unique identifier of said relay node, as well as the list of the unique identifiers of all source nodes connected to said relay node.

During a step 1302, the destination node uses the received information to determine the total number $N_{init}$ of relay nodes and the total number K of source nodes present in the network, as well as the network topology described by the connections present between the source nodes and the relay nodes as well as between the latter and the destination nodes. A step 1303 consists in determining and removing redundant relay nodes, as described above with regards to Figures 3a and 3b. At the end of step 1303, there remain N active relay nodes. During a step 1304, the destination node constructs the N-by-K network coding matrix A=$(\alpha_{ij})$ as described with regards to Figures 11 a and 11 b. During a step 1305, this matrix is decomposed into a product A=B*C-1 (or A*C=B), wherein B is an N-by-K matrix describing the systematic encoder for an (N, K)-Reed-Solomon code, as in Figure 2, and C is an invertible K-by-K matrix. This decomposition is advantageously achieved by a procedure known to those skilled in linear algebra as "Gauss-Jordan elimination", carried out column-wise on the matrix A augmented with K supplementary lines containing the K-by-K identity matrix. In other words, C is the inverse matrix of the K-by-K sub-matrix composed of the upper K rows of matrix A. Matrix C is stored by the destination node for the purpose of simple, optimized execution of a step 1360 described below with regards to Figure 13b.

During a step 1306, the destination node waits for the start of the timeslot allotted to itself within the subsequence 903 of the super-frame 900. Step 1306 is followed by a step 1307 of emitting the control frame 950 comprising the field 951 indicating N and K, the field 952 indicating the list of all source node unique identifiers and the fields 961, 962, ..., 96N indicating each one a unique identifier of a relay node, together with the list of network coding coefficients $\alpha_{ij}$ to be applied by said relay node. The process stops with step 1308. Note that destination nodes different from the chosen centralised destination and not calculating themselves the network coding matrix $(\alpha_{ij})$ carry out a highly simplified process, not presented on Figures 13a and 13b: they receive said network coding matrix through the broadcasting of control frame 950, so they can carry out just step 1305 to determine and store matrix C as described as above.

Figure 13b shows an algorithm of encoded data packet reception, Reed-Solomon decoding and recovery of the original source data as applied by the destination node DST in a preferred embodiment. This process starts with a step 1350 of detecting the start of a new super-frame 900. During a step 1351, the relay node counter i is initialized to 1. During a step 1352, the destination node waits for the start of the time slot allotted to the relay node $REL_i$ within the subsequence 902 of the super-frame 900. During a step 1353, the encoded data packet $r_i$ is received. This packet is an element of $GF(q)^L$.

During a step 1354, it is determined if the reception of said data packet is successful. If yes, a step 1355 is proceeded to. Otherwise, i.e., when a reception error is detected (as for example through analyzing RSSI or SNR, or calculating a CRC) or when the error notification provided by the relay node in step 1262 described above is detected, a step 1356 is proceeded to. Note that, if the relay node $REL_i$ was determined not to be connected to the destination node in question during step 1302, the reception would be likely to fail. However, the result of step 1354 does not have to depend on this fact, i.e., the destination may take advantage of an occasional correct reception through a poor quality link to improve its error correction capacity.

During step 1355, the received data packet $r_i$ is stored in the $i^{th}$ row of an N-by-L matrix $(p_{ih})$. During step 1356, said row is filled with erasure symbols. During a step 1357, the relay node counter i is incremented by 1. During a step 1358, it is determined if the relay node counter i is less than or equal to the total number of relay nodes N.

If yes, step 1352 is proceeded to. Consequently, steps 1352 to 1358 are repeated for i = 1, 2, ..., N. Otherwise, during a step 1359, (N, K)-Reed-Solomon error and erasure correction is carried out for each one of the L columns of aforementioned matrix $(p_{ih})$, taking into account possible erasures as stored during step 1356 described above. Any one of the well-known Reed-Solomon error correction algorithms is suitable for implementing step 1359. An error correction failure, caused by too many errors or erasures, causes the algorithm to abort with an error notification. Otherwise, treatment proceeds with step 1360 of recovering the original K-by-L source data matrix $(\sigma_{jh})$ (the rows of which constitute the original source data packets $s_j$) from the error-corrected N-by-L received-data matrix $(p_{ih})$. This is performed by solving the linear equation system $(P_{ih}) = (\alpha_{ij})*(\sigma_{jh})$.

While this system is over-determined (N equations for K unknowns with N>K), the equations are guaranteed not to be contradictory due to the Reed-Solomon error correction. Dropping the N-K last rows of matrix $(p_{ih})$ and multiplying the obtained K-by-L matrix by the matrix C previously determined during step 1305 provides the wanted source data matrix: $(\sigma_{jh}) = C*(p_{ih})$. During a step 1361, the K rows from said matrix $(\sigma_{jh})$, which constitute the original source data packets $s_j$ of length L, are output for further processing by the application 1030, out of the scope of present application. The algorithm stops during a step 1362, until the start of the next super-frame 900.

**Claims**

1. A method for transmitting data symbols, by using a linear error correcting code in a mesh communication network comprising a plurality of K source nodes, a plurality of $N_{init}$ relay nodes and a plurality of D destination nodes, the method comprising:

   - a step of selecting a plurality of N relay nodes among the $N_{init}$ relay nodes as a function of connections existing in said network;
   - a step of determining linear combinations of data symbols received from source nodes by the selected relay nodes using the coefficients of a generator matrix A of dimension N*K of said linear error correcting code as network coding coefficients; and
   - a step of transmitting said linear combinations to destination nodes connected to said selected relay nodes, and being

   **characterized in that** during the step of selecting, the N selected relay nodes are such that each non-empty subset $S_0$ of size $K_0$ of the set of the K source nodes remains connected to at least $K_0+M$ relay nodes among the N selected relay nodes, M being a predetermined number representing the network error correction capacity of the linear error correcting code.

2. A method according to claim 1, wherein M is determined by:

   - a step of determining, for every non-empty subset $S_0$ of the set S of the K source nodes, the set $R(S_0)$ of relay nodes connected to at least one member of So, and of determining $n(S_0)$ to be the difference between the cardinality of $S_0$ and the cardinality of $R(S_0)$;
   - a step of setting, for each relay node $REL_i$ connected to at least one source node, an associated relay connectivity number $rr_i$ to the smallest one of the values $n(S_0)$ corresponding to all the $R(S_0)$ containing said relay node $REL_i$, and the value $N_{init}-K+1$;
   - a step of determining $M = min(rr_i)$, for $i = 1, ..., N_{init}$.

3. A method according to any one of claims 1 to 2, that further comprises, in each destination node:

   - a step of constructing a word from the linear combinations received from relay nodes where each position in the word is associated with a relay node, and wherein an erased symbol is positioned at each position corresponding to a relay node from which no linear combination has been received; and
   - a step of decoding the constructed word to retrieve the data symbols transmitted by the sources nodes.

4. A method according to claim 1, wherein the step of selecting N relay nodes comprises, for every non-empty subset $S_0$ of the set S of the K source nodes:

   - a first step of eliminating all relay nodes not connected to any source node and
   - a second step of eliminating, among the relay nodes remaining after the first step of eliminating, at most n relay nodes $REL_{i1}, REL_{i2}, ...,REL_{in}$, having associated connectivity numbers $rr_{i1}, rr_{i2}, ..., r_{in}$ greater than or equal to M+n, and setting N to be the cardinality of the set of the relay nodes remaining after the second step of eliminating.

5. A method according to claim 4, wherein, during the second step of eliminating, relay nodes connected to a minimal number of destination nodes are eliminated first.

6. A method according to either one of claims 4 or 5, wherein, during the second step of eliminating, relay nodes for which $N_i = N_{min}$ are eliminated first, where $N_i$ is the number of destination nodes not connected to said relay nodes and, $N_{min}$ is the minimum value of $N_i$.

7. A method according to claim 1, the transmitted data symbols are symbols from a predetermined Galois Field GF, that further comprises the steps of:

   - constructing, for the error correcting code, the generator matrix A, of dimension N*K, with coefficients $\alpha_{ij}$ from said Galois Field GF, defined such that each row i corresponds to a relay node and each column j corresponds to a source node, wherein said coefficients are the scalar neutral element for addition, denoted "zero", for each position in the generator matrix that corresponds to a source node and a relay node between which no link exists;
   - determining, for each column of said generator matrix, the remaining coefficients so that said column corresponds to a codeword of the linear error correcting code and that all the columns are independent and
   - assigning the coefficients of each of the rows to its corresponding relay node, said coefficients being used by said relay node for linear network coding by linearly combining data symbols received from source nodes and transmitting the resulting linear combination to a destination node.

8. A method according to claim 7, wherein the step of constructing said generator matrix comprises, if at least one subset with cardinality c, with $0<c\leq K$, of the set of K sources nodes is connected to less than N-K+c relay nodes, during the step of determining said coefficients, the network is virtually augmented by adding at least one imaginary source node considered to be connected to each relay node.

9. A method according to claim 8, wherein, if M<N-K, K is replaced by an adjusted number $K_{adj}$ equal to N-M, the number of imaginary source nodes being $K_{adj}$-K.

10. A method according to any one of claims 8 or 9, wherein the step of constructing said generator matrix comprises:

    - erasing up to h positions of each column of the generator matrix that differ from the positions containing zeros, wherein h is the erasure correcting capacity of the linear error correcting code, h being equal to the minimum Hamming distance of sald code minus 1;
    - choosing values for coefficients corresponding to positions that differ from those positions containing either zeros or erasures, if any; and
    - recovering the erased positions by associating with each column a codeword of the linear error correcting code, wherein the predetermined values are chosen so that all the columns of the generator matrix are linearly independent.

11. A method according to claim 10, wherein the linear error correcting code is a Reed-Solomon code of size N and dimension K.

12. A method according to any one of claims 8 to 11, wherein the step of determining said coefficients is performed by one node of the network.

13. A device for transmitting data symbols, by using a linear error correcting code in a mesh communication network comprising a plurality of K source nodes, a plurality of $N_{init}$ relay nodes and a plurality of D destination nodes, the device comprising:

    - means for selecting a plurality of N relay nodes among the $N_{init}$ relay nodes as a function of connections existing in said network and
    - means for determining linear combinations of data symbols received from source nodes by the selected relay nodes using the coefficient of a generator matrix A of dimension N*K of said linear error correcting code as a network coding coefficient; and
    - means for transmitting said linear combinations to destination nodes connected to said selected relay nodes,

    and being **characterized in that** the N selected relay nodes are such that each non-empty subset $S_0$ of size $K_0$ of the set of the K source nodes remains connected to at least $K_0$+M relay nodes among the N selected relay nodes, M being a predetermined number representing the network error correction capacity of the linear correcting code.

14. A computer program loadable into a computer system, said program containing instructions enabling the implementation of the method according to any one of claims 1 to 12, when that program is loaded and executed by a computer system.

15. An information carrier readable by a computer or a microprocessor, removable or not, storing instructions of a computer program, **characterized in that** it enables the implementation of the method according to any one of claims 1 to 12.


**Patentansprüche**

1. Verfahren zum Übertragung von Datensymbolen unter Verwendung eines linearen Fehlerkorrekturkodes in einem Ad-hoc-Kommunikationsnetzwerk mit einer Vielzahl von K Quellknoten, einer Vielzahl von $N_{init}$ Relaisknoten und einer Vielzahl von D Zielknoten, wobei das Verfahren umfasst:

- einen Schritt des Auswählens einer Vielzahl von N Relaisknoten aus den $N_{init}$ Relaisknoten als eine Funktion existierender Verbindungen in dem Netzwerk;
- einen Schritt des Bestimmens von Linearkombinationen aus Datensymbolen, die von Quellknoten über die ausgewählten Relaisknoten unter Verwendung der Koeffizienten einer Generatormatrix A der Dimension N*K des linearen Fehlerkorrekturkodes als Netzwerkkodierungskoeffizienten empfangen wurden; und
- einen Schritt des Übertragens der Linearkombinationen zu Zielknoten, die mit den ausgewählten Relaisknoten verbunden sind;

**dadurch gekennzeichnet, dass**
während des Schritts des Auswählens die N ausgewählten Relaisknoten so sind, dass jede nichtleere Untermenge $S_0$ der Größe $K_0$ aus der Menge der K Quellknoten mit zumindest $K_0+M$ Relaisknoten aus den N ausgewählten Relaisknoten verbunden bleibt, wobei M eine vorbestimmte Zahl ist, die die Netzwerkfehlerkorrekturfähigkeit des linearen Fehlerkorrekturkodes darstellt.

2. Verfahren nach Anspruch 1, wobei M bestimmt ist durch:

- einen Schritt des Bestimmens, für jede nichtleere Untermenge $S_0$ der Menge S aus den K Quellknoten, des Satzes $R(S_0)$ an Relaisknoten, die mit zumindest einem Element von $S_0$ verbunden sind, und des Bestimmens von $n(S_0)$, welches die Differenz zwischen der Mächtigkeit von $S_0$ und der Mächtigkeit von $R(S_0)$ darstellt;
- einen Schritt des Einstellens, für jeden Relaisknoten $REL_i$, der mit zumindest einem Quellknoten verbunden ist, einer zugehörigen Relaisanschlussnummer $rr_i$ für den kleinsten der Werte $n(S_0)$, die all den $R(S_0)$ entsprechen, die den Relaisknoten $REL_i$ aufweisen, und des Wertes $N_{init}-K+1$; und
- einen Schritt des Bestimmens von M = min $(rr_i)$, mit i = 1, ..., $N_{init}$.

3. Verfahren nach einem der Ansprüche 1 bis 2, das zudem aufweist, in jedem Zielknoten:

- einen Schritt des Erzeugens eines Wortes aus den von Relaisknoten erhaltenen Linearkombinationen, wobei jede Position in dem Wort einem Leitungsknoten zugehörig ist, und wobei ein Gelöscht-Symbol jeweils an einer Position positioniert ist, die einem Relaisknoten entspricht, von dem keine lineare Kombination erhalten wurde, und
- einen Schritt des Dekodierens des erzeugten Wortes, um die seitens der Quellknoten übertragenen Datensymbole wiederherzustellen.

4. Verfahren nach Anspruch 1, wobei der Schritt des Auswählens von N Relaisknoten umfasst, für jede nichtleere Untermenge $S_0$ der Menge der K Quellknoten:

- einen ersten Schritt des Beseitigens aller Relaisknoten, die mit keinem Quellknoten verbunden sind, und
- einen zweiten Schritt des Beseitigens, unter den nach dem ersten Schritt des Beseitigens verbliebenen Relaisknoten, von höchstens n Relaisknoten $REL_{i1}$, $REL_{i2}$, ..., $REL_{in}$, die zugehörige Anschlussnummern $rr_{i1}$, $rr_{i2}$, ..., $rr_{in}$ größer oder gleich M+n aufweisen, und des Einstellens von N derart, dass es die Mächtigkeit der Menge der nach dem zweiten Schritt des Beseitigens verbleibenden Relaisknoten darstellt.

5. Verfahren nach Anspruch 4, wobei, während des zweiten Schritts des Beseitigens, Relaisknoten, die mit einer Minimalzahl von Zielknoten verbunden sind, zuerst beseitigt werden.

**6.** Verfahren nach einem der Ansprüche 4 oder 5, wobei, während des zweiten Schritts des Beseitigens, Relaisknoten mit $N_i = N_{min}$ zuerst beseitigt werden, wobei $N_i$ die Zahl an Zielknoten darstellt, die nicht mit den Relaisknoten verbunden sind, und $N_{min}$ der Minimalwert von $N_i$ ist.

**7.** Verfahren nach Anspruch 1, wobei die übertragenen Datensymbole Symbole aus einem vorgegebenen Galois-Feld GF sind, das zudem folgende Schritte aufweist:

- Erzeugen, für den Fehlerkorrekturkode, der Generatormatrix A der Dimension N*K mit Koeffizienten $\alpha_{ij}$ aus dem Galois-Feld GF derart, dass jede Zeile i einem Relaisknoten und jede Spalte j einem Quellknoten entspricht, wobei die Koeffizienten das als "Null" bezeichnete skalar neutrale Element für Addition für jede Position in der Generatormatrix sind, die einem Quellknoten und einem Relaisknoten entspricht, zwischen denen keine Verbindung besteht;
- Bestimmen, für jede Spalte der Generatormatrix, die verbleibenden Koeffizienten derart, dass die Spalte einem Kodewort des linearen Fehlerkorrekturkodes entspricht und dass alle Spalten unabhängig sind, und
- Zuweisen der Koeffizienten jeder der Reihen zu seinem entsprechenden Relaisknoten, wobei die Koeffizienten von dem Relaisknoten für lineare Netzwerkkodierung durch lineares Kombinieren von seitens Quellknoten empfangenen Datensymbolen und Übertragen der resultierenden linearen Kombination zu einem Zielknoten verwendet werden.

**8.** Verfahren nach Anspruch 7, wobei der Schritt des Erzeugens der Generatormatrix umfasst, falls zumindest eine Untermenge mit Kardinalität c, mit 0<c≤K, aus der Menge K Quellknoten mit weniger als N-K+c Relaisknoten verbunden ist, während des Schritts des Bestimmens der Koeffizienten das Netzwerk virtuell durch Zugabe mindestens eines imaginären Quellknoten zu ergänzen, der als zu jedem Relaisknoten verbunden angesehen wird.

**9.** Verfahren nach Anspruch 8, wobei, falls M<N-K, K durch eine eingestellte Zahl $K_{adj}$ gleich N-M ersetzt und die Zahl imaginärer Quellknoten $K_{adj}$-K ist.

**10.** Verfahren nach einem der Ansprüche 8 oder 9, wobei der Schritt des Erzeugens der Generatormatrix umfasst:

- Löschen von bis zu h Positionen jeder Spalte der Generatormatrix, die sich von den Null enthaltenen Positionen unterscheiden, wobei h die Löschkorrekturkapazität des linearen Fehlerkorrekturkodes darstellt und gleich dem minimalen Hamming-Abstand des Kodes minus 1 ist;
- Auswählen von Werten für Koeffizienten entsprechend den Positionen, die sich von den Positionen, die entweder Nullen oder Löschungen enthalten, falls überhaupt vorhanden, unterscheiden, und
- Wiederherstellen der gelöschten Positionen durch Assoziieren eines Kodeworts des linearen Fehlerkorrekturkodes zu jeder Spalte, wobei die vorbestimmten Werte derart gewählt sind, dass alle Spalten der Generatormatrix linear unabhängig sind.

**11.** Verfahren nach Anspruch 10, wobei der lineare Fehlerkorrekturkode ein Reed-Solomon-Code der Größe N und Dimension K ist.

**12.** Verfahren nach einem der Ansprüche 8 bis 11, wobei der Schritt des Bestimmens der Koeffizienten durch einen Knoten des Netzes durchgeführt wird.

**13.** Vorrichtung zum Übertragen von Datensymbolen unter Verwendung eines linearen Fehlerkorrekturkodes in einem Ad-hoc-Kommunikationsnetzwerk mit einer Vielzahl von K Quellknoten, einer Vielzahl von $N_{init}$ Relaisknoten und einer Vielzahl von D Zielknoten, mit:

- Mittel zum Auswählen einer Vielzahl von N Relaisknoten aus den $N_{init}$ Relaisknoten als eine Funktion existierender Verbindungen in dem Netzwerk;
- Mittel zum Bestimmen von Linearkombinationen aus Datensymbolen, die von Quellknoten über die ausgewählten Relaisknoten unter Verwendung der Koeffizienten einer Generatormatrix A der Dimension N*K des linearen Fehlerkorrekturkodes als Netzwerkkodierungskoeffizienten empfangen wurden; und
- Mittel zum Übertragen der Linearkombinationen zu Zielknoten, die mit den ausgewählten Relaisknoten verbunden sind;

**dadurch gekennzeichnet, dass**
die N ausgewählten Relaisknoten so sind, dass jede nichtleere Untermenge $S_0$ der Größe $K_0$ aus der Menge der K Quellknoten mit zumindest $K_0+M$ Relaisknoten aus den N ausgewählten Relaisknoten verbunden bleibt, wobei M eine vorbestimmte Zahl ist, die die Netzwerkfehlerkorrekturfähigkeit des linearen Fehlerkorrekturkodes darstellt.

14. Computerprogramm, das in ein Computersystem ladbar ist, wobei das Programm Anweisungen enthält, welche die Ausführung des Verfahrens nach einem der Ansprüche 1 bis 12 ermöglichen, wenn das Programm geladen und von einem Computersystem ausgeführt wird.

15. Informationsträger, der durch einen Computer oder einen Mikroprozessor lesbar ist, entfernbar oder nicht entfernbar konstruiert ist, und Befehle eines Computerprogramms speichert, das **dadurch gekennzeichnet ist, dass** es die Durchführung des Verfahrens nach einem der Ansprüche 1 bis 12 ermöglicht.

**Revendications**

1. Procédé pour transmettre des symboles de données, en utilisant un code correcteur d'erreur linéaire dans un réseau de communication maillé comprenant plusieurs K noeuds source, plusieurs $N_{init}$ noeuds de relais et plusieurs D noeuds de destination, le procédé comprenant :

   - une étape de sélection de plusieurs N noeuds de relais parmi les $N_{init}$ noeuds de relais en fonction de connexions existant dans ledit réseau ;
   - une étape de détermination de combinaisons linéaires de symboles de données reçus en provenance de noeuds source par les noeuds de relais sélectionnés en utilisant les coefficients d'une matrice génératrice A de dimension N*K dudit code correcteur d'erreur linéaire comme coefficients de codage de réseau ; et
   - une étape de transmission desdites combinaisons linéaires à des noeuds de destination connectés auxdits noeuds de relais sélectionnés, et

   étant **caractérisé en ce que** pendant l'étape de sélection, les N noeuds de relais sélectionnés sont tels que chaque sous-ensemble non vide $S_0$ de taille $K_0$ de l'ensemble des K noeuds source reste connecté à au moins $K_0+M$ noeuds de relais parmi les N noeuds de relais sélectionnés, M étant un nombre prédéterminé représentant la capacité de correction d'erreur de réseau du code correcteur d'erreur linéaire.

2. Procédé selon la revendication 1, dans lequel M est déterminé par :

   - une étape de détermination, pour chaque sous-ensemble non vide $S_0$ de l'ensemble S des K noeuds source, de l'ensemble $R(S_0)$ de noeuds de relais connectés à au moins un membre de $S_0$, et de détermination de $n(S_0)$ comme étant la différence entre la cardinalité de $S_0$ et la cardinalité de $R(S_0)$ ;
   - une étape de fixation, pour chaque noeud de relais $REL_i$ connecté à au moins un noeud source, d'un nombre de connectivité de relais associé $rr_i$ à la plus petite des valeurs $n(S_0)$ correspondant à tous les $R(S_0)$ contenant ledit noeud de relais $REL_i$, et de la valeur $N_{init}-K+1$ ;
   - une étape de détermination de $M = \min(rr_i)$, pour i = 1, ..., $N_{init}$.

3. Procédé selon l'une quelconque des revendications 1 ou 2, qui comprend en outre, dans chaque noeud de destination :

   - une étape de construction d'un mot à partir des combinaisons linéaires reçues de noeuds de relais où chaque position dans le mot est associée à un noeud de relais, et où un symbole effacé est positionné au niveau de chaque position correspondant à un noeud de relais en provenance duquel aucune combinaison linéaire n'a été reçue ; et
   - une étape de décodage du mot construit pour récupérer les symboles de données transmis par les noeuds source.

4. Procédé selon la revendication 1, dans lequel l'étape de sélection de N noeuds de relais comprend, pour chaque sous-ensemble non vide $S_0$ de l'ensemble S des K noeud source :

   - une première étape d'élimination de tous les noeuds de relais non connectés à un quelconque noeud source et
   - une seconde étape d'élimination, parmi les noeuds de relais restant après la première étape d'élimination, d'au plus n noeuds de relais $REL_{i1}$, $REL_{i2}$, ..., $REL_{in}$, ayant des nombres associés de connectivité $rr_{i1}$, $rr_{i2}$, ..., $rr_{in}$ supérieurs ou égaux à M+n, et de fixation de N comme étant la cardinalité de l'ensemble des noeuds de relais restant après la seconde étape d'élimination.

5. Procédé selon la revendication 4, dans lequel, au cours de la seconde étape d'élimination, les noeuds de relais connectés à un nombre minimal de noeuds de destination sont éliminés en premier.

6. Procédé selon l'une des revendications 4 ou 5, dans lequel, au cours de la seconde étape d'élimination, les noeuds de relais pour lesquels $Ni = N_{min}$ sont éliminés en premier, où $Ni$ est le nombre de noeuds de destination non connectés auxdits noeuds de relais et $N_{min}$ est la valeur minimum de $Ni$.

7. Procédé selon la revendication 1, les symboles de données transmis étant des symboles d'un corps de Galois GF prédéterminé, qui comprend en outre les étapes de :

- construction, pour le code correcteur d'erreur, de la matrice génératrice A, de dimension N*K, avec des coefficients $\alpha_{ij}$ à partir dudit corps de Galois GF, définis de sorte que chaque ligne i corresponde à un noeud de relais et chaque colonne j corresponde à un noeud source, lesdits coefficients étant l'élément neutre scalaire pour l'addition, désigné « zéro », pour chaque position dans la matrice génératrice qui correspond à un noeud source et un noeuds de relais entre lesquels aucun lien n'existe ;
- détermination, pour chaque colonne de ladite matrice génératrice, des coefficients restants de sorte que ladite colonne corresponde à un mot de code du code correcteur d'erreur linéaire et que toutes les colonnes soient indépendantes, et
- d'assignation des coefficients de chacune des lignes à son noeud de relais correspondant, lesdits coefficients étant utilisés par ledit noeud de relais pour un codage de réseau linéaire en combinant linéairement des symboles de données reçus de noeuds source et en transmettant la combinaison linéaire résultante à un noeuds de destination.

8. Procédé selon la revendication 7, dans lequel l'étape de construction de ladite matrice génératrice comprend, si au moins un sous-ensemble avec la cardinalité c, avec $0<c\leq K$, de l'ensemble de K noeuds source est connecté à moins de N-K+c noeuds de relais, au cours de l'étape de détermination desdits coefficients, le réseau est augmenté de façon virtuelle en ajoutant au moins un noeud source imaginaire considéré comme étant connecté à chaque noeud de relais.

9. Procédé selon la revendication 8, dans lequel, si M<N-K, K est remplacé par un nombre ajusté $K_{adi}$ égal à N-M, le nombre de noeuds source imaginaires étant $K_{adj}$-K.

10. Procédé selon l'une quelconque des revendications 8 ou 9, dans lequel l'étape de construction de ladite matrice génératrice comprend :

- l'effacement de jusqu'à h positions de chaque colonne de la matrice génératrice qui diffèrent des positions contenant des zéros, h étant la capacité de correction d'effacement du code correcteur d'erreur linéaire, h étant égal à la distance de Hamming minimum dudit code moins 1 ;
- le choix de valeurs pour des coefficients correspondant à des positions qui diffèrent de ces positions contenant soit des zéros soit des effacements, s'il y en a ; et
- la reconstitution des positions effacées en associant à chaque colonne un mot de code du code correcteur d'erreur linéaire, les valeurs prédéterminées étant choisies de sorte que toutes les colonnes de la matrice génératrice soient linéairement indépendantes.

11. Procédé selon la revendication 10, dans lequel le code correcteur d'erreur linéaire est un code de Reed-Solomon de taille N et de dimension K.

12. Procédé selon l'une quelconque des revendications 8 à 11, dans lequel l'étape de détermination desdits coefficients est effectuée par un noeud du réseau.

13. Dispositif pour transmettre des symboles de données, en utilisant un code correcteur d'erreur linéaire dans un réseau de communication maillé comprenant plusieurs K noeuds source, plusieurs $N_{init}$ noeuds de relais et plusieurs D noeuds de destination, le dispositif comprenant :

- des moyens pour sélectionner plusieurs N noeuds de relais parmi les $N_{init}$ noeuds de relais en fonction de connexions existant dans ledit réseau, et

- des moyens pour déterminer des combinaisons linéaires de symboles de données reçus en provenance de noeuds source par les noeuds de relais sélectionnés en utilisant le coefficient d'une matrice génératrice A de dimension N*K dudit code correcteur d'erreur linéaire comme un coefficient de codage de réseau ; et
- des moyens pour transmettre lesdites combinaisons linéaires à des noeuds de destination connectés auxdits noeuds de relais sélectionnés,

et étant **caractérisé en ce que** les N noeuds de relais sélectionnés sont tels que chaque sous-ensemble non vide $S_0$ de taille $K_0$ de l'ensemble des K noeuds source reste connecté à au moins $K_0+M$ noeuds de relais parmi les N noeuds de relais sélectionnés, M étant un nombre prédéterminé représentant la capacité de correction d'erreur de réseau du code correcteur d'erreur linéaire.

14. Programme d'ordinateur chargeable dans un système informatique, ledit programme contenant des instructions permettant la mise en oeuvre du procédé selon l'une quelconque des revendications 1 à 12, lorsque ce programme est chargé et exécuté par un système informatique.

15. Support d'informations lisible par un ordinateur ou un microprocesseur, amovible ou non, stockant des instructions d'un programme d'ordinateur, **caractérisé en ce qu'**il permet la mise en oeuvre du procédé selon l'une quelconque des revendications 1 à 12.

Figure 1

EP 2 360 863 B1

Start — 200

i := 1 — 201

$rr_i := N-K+1$ — 202

i := i+1 — 203

i ≤ N? — 204
yes / no

Determination of the non-empty sub-sets of S — 205

From 214 →

Selection of a sub-set $S_0$ — 206

Determination of the relay nodes connected to $S_0$ : $R(S_0)$ — 207

$n(S_0) := card(R(S_0)) - card(S_0)$ — 208

i := 1 — 209

$REL_i \in R(S_0)$? — 210
no / yes

$rr_i := min(rr_i, n(S_0))$ — 211

i := i+1 — 212

i ≤ N? — 213
yes / no

All the sub-sets processed? — 214
yes / no
To 206

Storage of the list $(rr_i)$ — 215

$M := min(rr_i)$
Storage of M — 216

M > 0? — 217
yes / no

Fail — 219

OK — 218

Figure 2

Figure 3a

From 318 (figure 3a)

Sort relays:
If $rr_x > rr_y$ then
    $REL_x$ comes before $REL_y$
Else if $rd\_min_x < rd\_min_y$ then
    $REL_x$ comes before $REL_y$
Else if $rd\_cnt_x < rd\_cnt_y$ then
    $REL_x$ comes before $REL_y$

319

$n := 1$  320

$rr_{i_n} > M+n-1?$  321

no

yes

Flag the relay $REL_{i_n}$ as inactive

322

$n := n+1$  423

$N :=$ Number of active relays

324

Determine $rr_i$  325
(Figure 2)

To 308

Figure 3b

Figure 4

EP 2 360 863 B1

Figure 5

EP 2 360 863 B1

Figure 6

Figure 7

Figure 8

900

time

SRC₁ SRC₂ ... SRCₖ REL₁ REL₂ ... RELₙ DST₁ DST₂ ... DSTᴅ

901 902 903

Figure 9a

950

| N | K | Id(SRC₁) Id(SRC₂) ... Id(SRCₖ) | Id(REL₁) α₁₁ α₁₂ ... α₁ₖ | ... | Id(RELₙ) αₙ₁ αₙ₂ ... αₙₖ |

951 952 961 96N

Figure 9b

Figure 10

1100 — Start

1101 — K := Number of source nodes

1102 — N := Number of active relay nodes

1103 — Fetch network topology

1104 — Redundancy of N-K is feasible with the network topology?

yes

1105 — Increase K accordingly

no

1106 — Choose GF(q) with q>N

1107 — Create matrix with N rows and K columns

1108 — Position zeros corresponding to missing connections

Figure 11a

1109 — Column number j := 1

1110 — $Z_j$ := number of 0 in column j

1111 — $\alpha_{i_0 j}$ := 1 for $i_0$ := min {i: 1≤i≤N and $\alpha_{ij}$≠0}

1112

Set $\alpha_{i_1 j}$ , $\alpha_{i_2 j}$ ,..., $\alpha_{i_{K-Z_j-1} j}$ to randomly chosen values for $i_0 < i_1 < ... < i_{K-Z_j-1}$ being minimal indices of {i: 1≤i≤N and $\alpha_{ij}$≠0}

Mark remaining N-K coefficients in column j as erasures

1114 — Generate (N, K)-Reed-Solomon code word    1113

1115 — j := j+1

1116 — j≤K?    yes

no

1117 — Rank of matrix = K?    no

yes

1118 — Output matrix

1119 — Stop

Figure 11b

1200

Start

1201 — Reception of control Frame 950

1202 — Extraction of N and K (field 951)

1203 — Extraction of source Id list (field 952)

1204 — Presence of field 96i (Check Id)?

no

yes

1205 — Extraction of relevant relay coefficients $a_{i1}$, $a_{i2}$, ..., $a_{iK}$ (field 96i)

1207 — Enter inactive mode

1206 — Store said relay coefficients $a_{i1}$, $a_{i2}$, ..., $a_{iK}$

Stop 1208

Figure 12a

EP 2 360 863 B1

```
                        ┌─────────────────────────────────┐  ⟋ 1250
                        │    Start of a Super-Frame 900    │
                        └─────────────────────────────────┘
                                       │
              1251 ⟍         ┌──────────────┐
                             │    j := 1    │
                             └──────────────┘
                                       │
        1252 ⟍         ┌─────────────────────────────────┐
                       │   Start of timeslot for SRC_j    │
                       └─────────────────────────────────┘
                                       │
        1253 ⟍                ╱◇╲                      yes      1254 ⟍
                           ╱         ╲ ─────────────────────┐
                          ◇ SRC_j connected? ◇              │
                           ╲         ╱           ┌────────────────────────┐
                             ╲◇╱                 │   Receive and store s_j │
                              │ no               └────────────────────────┘
        1255 ⟍         ┌──────────────┐
                       │   j := j+1   │
                       └──────────────┘                1256 ⟍
                              │                          ╱◇╲
                              └──────────────────────→  ◇ j ≤ K? ◇ ──── yes
                                                         ╲◇╱
                                                          │ no
```

$$r_i := \sum_{j:=1}^{K} \alpha_{ij} s_j$$

Reception error occurred?

yes — 1257

1261 — Start of timeslot for REL_i

1262 — Transmit error notification

no — 1258

Calculate linear combination $r_i := \sum_{j:=1}^{K} \alpha_{ij} s_j$

1259 — Start of timeslot for REL_i

1263 — Stop

1260 — Transmit $r_i$

Figure 12b

1300 — ( Start of initialization sequence )

1301 — Reception of lists of connected source nodes from every relay node

1302 — Determination of $N_{init}$, K and the network topology

1303 — Remove redundant relays (Figure 3)

1304 — Construct network coding matrix (Figure 11)

1305 — Decompose matrix through GJ elimination

1306 — Wait for start of timeslot 903

1307 — Send Control Frame 950

1308 — ( Stop )

Figure 13a

1350 Start of a Super-Frame 900

1351 $i := 1$

1352 Start of timeslot for $REL_i$

1353 Reception of $r_i$

1354 $r_i$ successfully received?

1356 no

Store erasure at position i

yes

Store $r_i$

1355

1357 $i := i+1$

1358 $i \leq N?$  yes

no

1359 Reed-Solomon decoding of $(r_1, r_2, \ldots, r_N)$

1360 Solve linear equation system

1361 Output $(s_1, s_2, \ldots, s_K)$

1362 Stop

Figure 13b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7380193 B

- FR 2932630

**Non-patent literature cited in the description**

- **ADITYA RAMAMOORTHY ; ANDALAM SATYA MOHAN VAMSI.** EE 520: Topics in Communications: Network Coding; Lecture 11. Iowa State University, 05 October 2007

- **SHENGHAO YANG ; RAYMOND W. YEUNG.** Characterizations of Network Error Correction/Detection and Erasure Correction. The Chinese University of Hong Kong